# EUROPÄISCHE PATENTSCHRIFT

(11) **EP 2 357 114 B1**
(45) Veröffentlichungstag und Bekanntmachung des Hinweises auf die Patenterteilung: **02.04.2014**
(21) Anmeldenummer: 11165110.5
(22) Anmeldetag: 22.05.2007
(51) Int. Cl.: B60T 8/24, B60T 13/08, B60D 1/32

(54) **Hydraulische Anhängerbremsanlage**
Hydraulic trailer brake system
Système de freinage hydraulique pour remorque

(30) Priorität: 22.05.2006 DE 102006024160; 22.05.2007 DE 102007024108; 03.07.2006 DE 102006030924; 18.07.2006 DE 102006033590
(43) Veröffentlichungstag der Anmeldung: 17.08.2011
(62) Teilanmeldung aus: 07729409.8
(73) Patentinhaber: Continental Teves AG & Co. oHG, 60488 Frankfurt (DE)
(72) Erfinder: Gastauer, Heiko, 66679 Losheim am See (DE); Hinz, Axel, 61267 Neu-Anspach (DE); Hoffmann, Jan, 61191 Rosbach (DE); Greiff, Uwe, 63500 Seligenstadt (DE); Hartmann, Ralf, 65830 Kriftel (DE); Domsalla, Eberhard, 65558 Burgschwalbach (DE); Wolf, Hans-Peter, 65527 Niedernhausen (DE); Heise, Andreas, 64390 Erzhausen (DE)

(56) Entgegenhaltungen:
- EP-A1- 1 308 358
- EP-A1- 1 375 279
- WO-A-97/13669
- WO-A-2004/041614
- WO-A1-91/08130
- DE-U1- 20 116 706
- DE-U1- 20 316 698

## Beschreibung

Die Erfindung betrifft eine hydraulische Anhängerbremsanlage nach dem Oberbegriff des Anspruchs 1.

In der EP 1 375 279 A1 ist eine gattungsgemäße Anhängerbremsanlage zum Abbremsen der Räder eines auflaufgebremsten Anhängers zur Verringerung von Schlingerbewegungen offenbart. Die Bremsanlage weist eine mit einem Antiblockiersystem kombinierte elektro-hydraulische Stabilisierungseinrichtung EHS auf, die beide Seiten des Anhängers im Fall von Schlingerbewegungen individuell abbremsen kann. Hierzu sind spezielle Zusatzdruckölspeicher, spezielle ABS-Kolben-Zylinder-Komponenten sowie spezielle EHS-Zylinder-Kolben-Komponenten vorgesehen, mittels denen die ABS-Funktion und die EHS-Funktion durchgeführt werden können.

Aus der DE 19964048 A1 ist eine Vorrichtung zum Stabilisieren eines Straßenfahrzeugs, insbesondere eines Personenkraftwagens, mit einem durch das Straßenfahrzeug gezogenen Anhänger bekannt, wobei das Straßenfahrzeug in Bezug auf Schlingerbewegungen überwacht und dem Straßenfahrzeug bei Erkennen einer Schlingerbewegung automatisch ein im Wesentlichen periodisches Giermoment eingeprägt wird, das der Schlingerbewegung im Wesentlichen gegenphasig ist.

Aus der DE 100 48 418 A1 ist ein Verfahren zur Stabilisierung eines Fahrzeugs bekannt, wobei ein sich periodisch veränderndes Giermoment durch wechselseitigen Bremseingriff auf das Fahrzeug aufgebracht wird.

Die DE 203 16 698 U1 offenbart eine Anhängerdeichsel für Fahrzeuganhänger mit einer Stabilisierungskugelkupplung, die eine auf eine Zugkugel eines Zugfahrzeugs aufsetzbare Kalotte und eine an der Kalotte vorgesehene Stabilisierungseinrichtung in der Form einer Reibelementeinrichtung aufweist, die mit der Zugkugel zusammenwirkt, um Schlingerbewegungen des Fahrzeuganhängers zu dämpfen, welche eine Überwachungseinrichtung zur Überwachung der von der Stabilisierungseinrichtung erzeugten Dämpfung umfasst.

Aus der WO 2004/041614 A1 ist ein Verfahren und eine Einrichtung zum Stabilisieren eines Gespanns mit einem Zugfahrzeug und einem durch das Zugfahrzeug bewegten Anhänger bekannt, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden. Das Verfahren umfasst die Schritte Ermitteln und Bewerten von den Schlingerbewegungen im Hinblick auf kritische oder unkritische Fahrzustände und Verzögern des Zugfahrzeugs in Abhängigkeit von den Amplituden der Schlingerbewegungen.

In der DE 201 16 706 U1 ist eine Zugkugelkupplung eines Anhängers offenbart, mit einer Kugelkalotte, die eine Zugkugel eines Fahrzeugs umschließt, mit einer Stabilisierungseinrichtung zur Verminderung von Schlingerbewegungen des Anhängers, welche mindestens eine im Bereich der Kugelkalotte angeordnete Zuspanneinrichtung mit einem Reibelement zur Beeinflussung der Reibkräfte zwischen Kugelkalotte und Zugkugel umfasst, wobei das Reibelement hydraulisch mit einem von der Geschwindigkeit des Anhängers abhängigen Anpressdruck an die Zugkugel anpressbar ist.

Der Erfindung liegt die Aufgabe zugrunde, eine einfache und kostengünstige Anhängerbremsanlage der eingangs genannten Art zu schaffen, mit der auf einfache Weise bei Aufrechterhaltung einer hohen Bremsstabilität Schlingerbewegungen von Anhängern unterbunden bzw. verringert werden können.

Diese Aufgabe wird erfindungsgemäß durch eine Vorrichtung mit den Merkmalen des Anspruch 1 gelöst.

Die erfindungsgemäße hydraulische Anhängerbremsanlage mit einer Einrichtung zum Abbremsen der Räder des Anhängers und mit einem steuerbaren Druckerzeuger zur rad- oder achsindividuellen Ansteuerung von Radbremsen, wobei der Einrichtung eine hydraulische Bremskraftübertragungsvorrichtung mit einem Vorratsbehälter für das Druckmittel und ein Hauptbremszylinder zugeordnet sind und die Bremskraftübertragungsvorrichtung über Bremsleitungen mit den Radbremsen verbunden ist, sowie einer elektronischen Steuer- oder Regelungseinheit, die über eine Versorgungseinheit Energie erhält, zeichnet sich dadurch aus, dass mindestens zwei erste Radbremsen über ein in einer der Bremsleitungen angeordnetes erstes Trennventil mit dem Hauptbremszylinder verbunden sind,
dass den ersten Radbremsen mindestens ein erstes Einlass- und ein erstes Auslassventil zugeordnet sind,
dass in einer Bypassleitung um das erste Trennventil ein erstes Umschaltventil und eine erste elektrisch ansteuerbare Druckmittelpumpe vorgesehen sind, deren Saugseite mit dem ersten Umschaltventil, dem mindestens einen ersten Auslassventil und einem ersten Niederdruckspeicher und deren Druckseite mit dem ersten Trennventil und dem mindestens einen ersten Einlassventil verbunden ist,
dass eine Stabilisierungskupplung zwischen Anhänger und Zugfahrzeug Aktuatoren aufweist, die mit einer zweiten Druckmittelpumpe verbunden sind und die die Spannkraft der Stabilisierungskupplung verändern können, wenn die zweite Druckmittelpumpe Druckmittel in die Aktuatoren fördert, und dass die Saugseite der zweiten Druckmittelpumpe über das erste oder ein zweites Umschaltventil mit dem Hauptbremszylinder verbunden werden kann.

Die hydraulische Anhängerbremsanlage zur Fahrstabilisierung von Fahrzeug-Anhängern basiert vorteilhaft auf einem bei Fahrzeugen verwendeten, modifizierten ESP-System mit vorzugsweise zwei Bremskreisen. Mit den Brems- bzw. Druckkreisen können auch weitere Komponenten bzw. Baugruppen, wie z.B. Hochdruckspeicher und/oder Hydraulikkzylinder, verbunden werden. Die Radbremsen können dabei individuell oder paarweise (linkes und rechtes Rad einer Achse) angesteuert werden.

Nach einem vorteilhaften Ausführungsbeispiel werden an einen Bremskreis die Räder einer Achse angeschlossen, wobei die Stabilisierungs-Kugelkupplung und die Räder einer weiteren Achse an den anderen Bremskreis angeschlossen werden.

Als besonders vorteilhaft hat sich herausgestellt, wenn das Ausführungsbeispiel, oder Ausführungsvarianten davon, so modifiziert wird, dass die Druckseiten der in beiden Kreisen angeordneten Druckmittelpumpen über eine Verbindungsleitung miteinander verbunden werden. Hierdurch können die beiden Pumpen den Bremsdruck in den Radbremsen einer Achse erzeugen. Durch die kurzgeschlossenen Pumpen können gezielt die Räder einer Achse nach vorgegebenen Kriterien abgebremst werden, während die Räder der anderen Achse zu einem späteren Zeitpunk nach gleichen oder anderen Vorgaben abgebremst werden kann. Dabei sind auch die Niederdruckspeicher der beiden Kreise ebenfalls über eine Verbindungsleitung miteinander verbunden.

Durch einen modifizierten Schaltkreis eines ESP-System kann vorteilhaft ein aktiver Druckaufbau in den Radbremsen des Anhängers erfolgen.

Ein weiterer technischer Vorteil im Vergleich zu vorhandenen Systemen ist, dass Undichtigkeiten im Kugelstabilisierungskupplungskreis erkannt werden, und dieser Kreis eine Nachlaufverbindung hat.

Vorteilhafte Ausführungsformen der erfindungsgemäßen hydraulischen Anhängerbremsanlage sind in den Unteransprüchen beschrieben.

Bei einer Normalbremsung wird von dem Hauptbremszylinder Druck in allen 4 Rädern erzeugt.

Bei Rückwärtsfahrten werden die Einlassventile geschlossen und das Volumen in den Radsätteln mittels Auslassventilen zum Niederdruckspeicher geleitet.

Die Verringerung des Bremsdruckes erfolgt durch Druck- bzw. Volumenabbau (in den Radsätteln) über das/die Auslassventil/e, von welchem das Druckmittel zum Niederdruckspeicher strömt und (falls erforderlich) mit der Pumpe wieder in den Hauptzylinder gefördert wird.

ABS: Wenn ein Rad blockiert, wird das entsprechende Einlassventil geschlossen und das entsprechende Auslassventil geöffnet. Über das Auslassventil strömt das Druckmittel von dem entsprechenden Radpaar zum Niederdruckspeicher, von welchem das Druckmittel mittels Pumpe über das Trennventil zum Hauptzylinder zurückgefördert wird.

In einer Gefahrensituation kann die im Normalfall geschwindigkeitsabhängig geregelte Druckmittelzufuhr in die Aktuatoren der Stabilisierungs-Kupplung zusätzlich zur Stabilisierung der Verbindung zwischen Zugfahrzeug und Anhänger verwendet werden. Hierzu wird das Trennventil geschlossen und das elektrische Umschaltventil, über welches die Pumpe das Druckmittel zu zwei Kolben der Aktuatoren an der Kugelkupplung befördert, geöffnet. Hierdurch kann die auf die Kupplung wirkende Reibung beliebig eingestellt werden. Wenn das Reibmoment gesenkt werden soll, wird das Einlassventil geschlossen und das Auslassventil geöffnet. Über das Auslassventil strömt das Fluid von dem Kolben zum Niederdruckspeicher, von welchem das Fluid mittels Pumpe über das Trennventil zum Hauptzylinder zurückgefördert wird.

Die Energieversorgung der den Pumpen zugeordneten Pumpenantriebsmotoren erfolgt über eine separate Versorgungseinheit. Hierzu ist vorgesehen, dass die Versorgungseinheit Akkumulatoren, vorzugsweise ein ACCU Pack, enthält, die über ein Verbindungselement zwischen Fahrzeug und Anhänger mit der Batterie des Fahrzeugs verbunden sind, wobei die Akkumulatoren mit der Steuer- und Regelungseinheit verbunden sind.

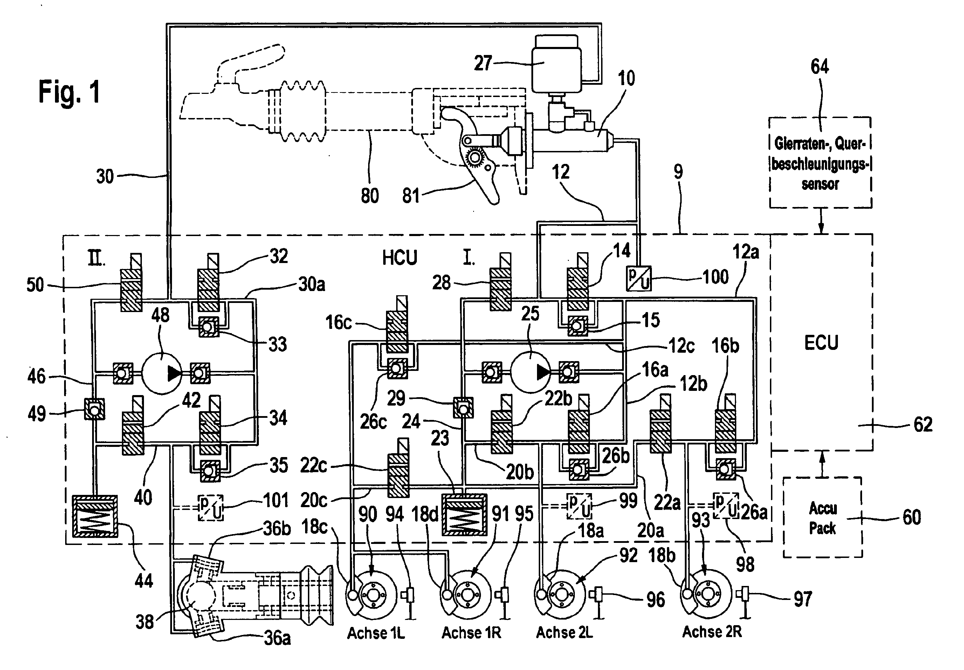

Vorteilhaft ist eine hydraulische Anhängerbremsanlage bei der ein Tandem-Hauptbremszylinder vorgesehen ist. Durch den Tandem-Hauptzylinder funktionieren die beiden Kreise unabhängig voneinander. Ein Kreis versorgt die Stabilisierungs-Kugelkupplung und ein Radbremsenpaar und der andere Kreis das andere Radbremsenpaar mit Fluid. Die Anhängerbremsanlage sieht dabei also vor, dass ein Radbremsenpaar im Kreis der Stabilisierungs-Kugelkupplung und ein anderes Radbremsenpaar in einem Bremskreis angeordnet ist. Selbstverständlich kann auch nur eine Radbremse je Kreis vorgesehen sein, wenn es sich um einen nur eine Achse aufweisenden Anhänger handelt. Die Ausführungsform ist dadurch gekennzeichnet, dass der Hauptbremszylinder zwei Druckkammern mit zwei Ausgängen aufweist, wobei die Bremsleitung mit dem einen Ausgang und die Druckleitung mit dem anderen Ausgang verbunden ist und die Bremsleitung nach dem ersten Trennventil über eine Bremsdruckteilleitung mit einem ersten Einlassventil mit den Radbremsen einer ersten Anhängerachse verbunden ist und dass die Radbremsen mit einer Rücklaufleitung verbunden sind, in denen ein erstes Auslassventil angeordnet ist, wobei die Rücklaufleitung mit dem ersten Niederdruckspeicher und über eine Leitung mit der Saugseite der ersten Pumpe und dem ersten Umschaltventil verbunden ist, das an die Bremsleitung angeschlossen ist. Dabei ist die Druckleitung über ein zweites Trennventil in einer Druckteilleitung mit einem zweiten stromlos geschlossenen Einlassventil mit den Aktuatoren der Stabilisierungs-Kugelkupplung und über eine weitere Druckteilleitung und einem zweiten Einlassventil mit den Radbremsen einer zweiten Anhängerachse verbunden, wobei die Aktuatoren und die Radbremsen jeweils mit einer Rücklaufleitung verbunden sind, in der jeweils ein zweites Auslassventil angeordnet ist. Die Rücklaufleitungen sind jeweils mit dem zweiten Niederdruckspeicher und über eine Leitung mit der Saugseite der zweiten Pumpe und dem zweiten Umschaltventil verbunden, die an die Leitung angeschlossen ist. Im Gegensatz zu der Ausführungsform nach Figur 1 ist das Einlassventil des Stabilisierungs-Kugelkupplungs-Kreises als stromlos geschlossenes Ventil ohne Rückschlagventil ausgebildet. Durch das stromlos geschlossene Einlassventil im Stabilisierungs-Kugelkupplungs-Kreis wird bei einer Normalbremsung über die Betätigung des Hauptzylinders durch z.B. die Auflaufbremse ein Druckabfall in der Stabilisierungs-Kugelkupplung verhindert.

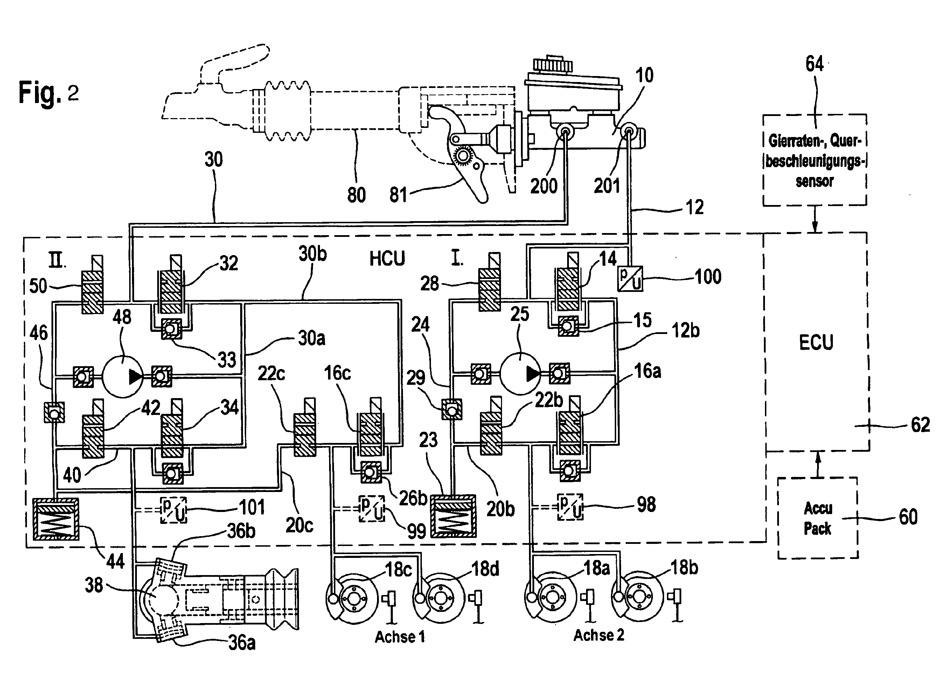

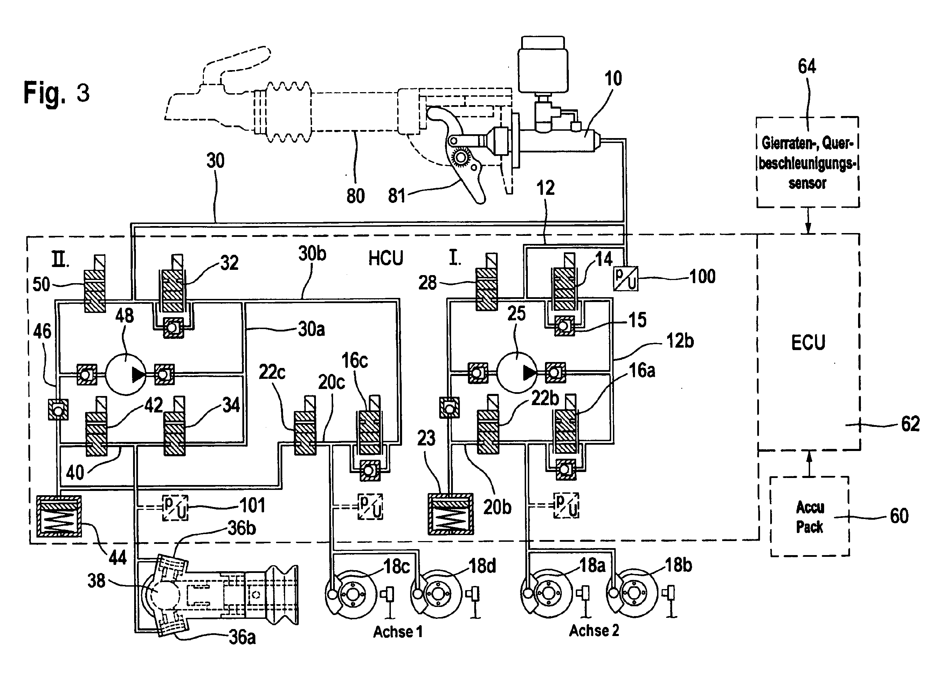

Es ist nach einer weiteren Ausführungsform der hydraulischen Anhängerbremsanlage zweckmäßig, dass der Hauptbremszylinder mit einer zweiten Druckleitung verbunden ist, in der ein zweites Trennventil in einer Druckteilleitung mit einem zweiten stromlos geschlossenem Einlassventil mit den Aktuatoren der Stabilisierungs-Kugelkupplung und über eine Druckteilleitung und einem zweiten stromlos offenen Einlassventil mit den Radbremsen einer zweiten Anhängerachse verbunden ist, die Aktuatoren und die Radbremsen jeweils mit einer Rücklaufleitung verbunden sind, in der jeweils ein zweites Auslassventil angeordnet ist, wobei die Rücklaufleitungen mit dem zweiten Niederdruckspeicher und über Leitungen mit der Saugseite der zweiten Pumpe und dem zweiten Umschaltventilen verbunden sind, die an die zweite Druckleitung angeschlossen ist. Damit sieht die Anhängerbremsanlage im Unterschied zu der Ausführungsvariante nach Figur 2 nur einen Hauptbremszylinder mit einer Druckkammer vor, wobei dann die zweite Druckleitung an die Bremsleitung angeschlossen ist. Vorteilhaft ist dabei, dass zwei Radbremsen über ein in der Bremsleitung angeordnetes erstes Trennventil und ein erstes Umschaltventil mit dem Hauptbremszylinder verbunden sind, dass weiterhin den Radbremsen der ersten Achse ein erstes Einlass- und ein erstes Auslassventil zugeordnet sind, dass ferner in einer Bypassleitung nach dem ersten Umschaltventil und dem ersten Trennventil die erste elektrisch ansteuerbare Druckmittelpumpe vorgesehen ist, deren Saugseite mit dem ersten Umschaltventil, dem ersten Auslassventil und dem ersten Niederdruckspeicher und deren Druckseite mit dem ersten Trennventil und dem ersten Einlassventil verbunden ist. Bei der hydraulischen Anhängerbremsanlage nach dem Ausführungsbeispiel gemäß Figur 3 sind die Radbremsen der ersten Achse über die Rücklaufleitung mit dem Auslassventil mit dem ersten Niederdruckspeicher verbunden sind. Im Gegensatz zu der beispielgemäßen hydraulischen Anhängerbremsanlage nach Figur 1 ist auch bei dieser Ausführungsform das Einlassventil des Stabilisierungs-Kugelkupplungs-Kreises als stromlos geschlossenes Ventil ohne Rückschlagventil ausgebildet. Durch das stromlos geschlossene Einlassventil im Stabilisierungs-Kugelkupplungs-Kreis wird bei einer Normalbremsung über die Betätigung des Hauptzylinders durch z.B. die Auflaufbremse ein Druckabfall in der Stabilisierungs-Kugelkupplung verhindert. Die Anhängerbremsanlage sieht dabei also vor, dass ein Radbremsenpaar im Kreis der Stabilisierungs-Kugelkupplung und ein anderes Radbremsenpaar in einem separaten Bremskreis angeordnet ist. Selbstverständlich kann auch nur eine Radbremse je Kreis vorgesehen sein, wenn es sich um einen nur eine Achse aufweisenden Anhänger handelt.

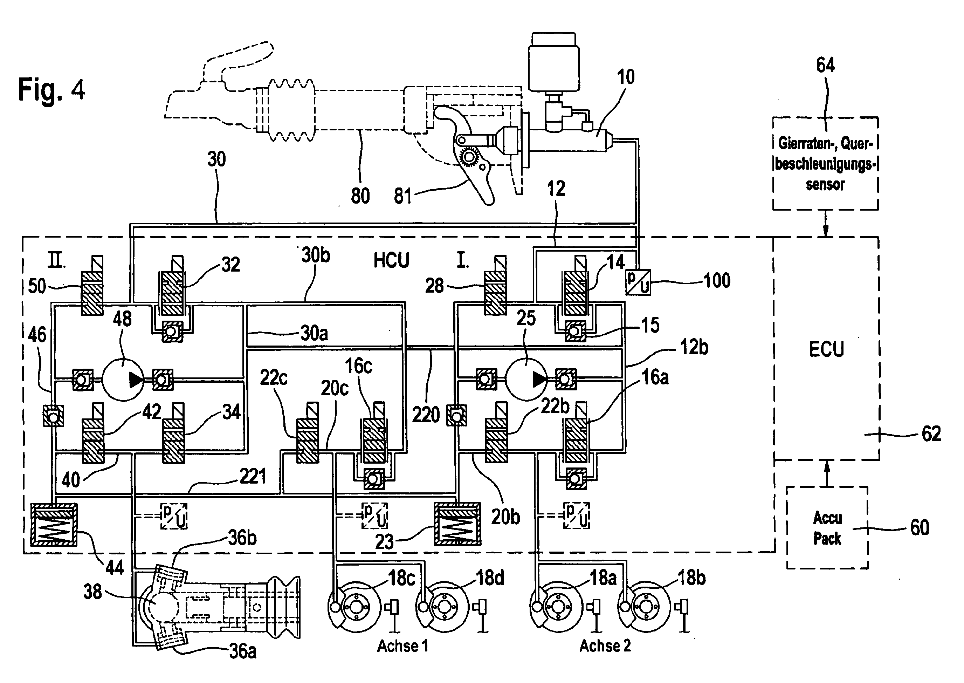

Die in der Figur 4 schematisch dargestellte hydraulische Anhängerbremsanlage sieht gegenüber der z.B. in Figur 3 dargestellten Anlage vorteilhaft vor, dass die Rücklaufleitungen mit dem ersten Auslassventil und dem zweiten Auslassventil über eine Verbindungsleitung mit dem ersten Niederdruckspeicher und dem zweiten Niederdruckspeicher verbunden sind. Weiterhin sieht diese Ausführungsform vor, dass auch die Druckseiten der ersten Druckmittelpumpe und der zweiten Druckmittelpumpe über eine Verbindungsleitung miteinander verbunden sind. Dabei ist die Verbindungsleitung zwischen dem ersten Trennventil und der Bypassleitung mit der ersten Druckmittelpumpe an die Bremsleitung und zwischen dem zweiten Trennventil und der Bypassleitung mit der zweiten Druckmittelpumpe an die Druckteilleitung angeschlossen. Diese Ausführungsform ermöglicht es, dass mittels der ersten und zweiten Pumpe Fluid zu einem Radbremsenpaar einer Anhängerachse gefördert werden kann. Durch diese "kurzgeschlossene" Variante, bei der die Niederdruckspeicher und die beiden Pumpen der beiden Kreise miteinander verbunden sind, kann gezielt eine Anhängerachse nach bestimmten Kriterien mit beiden Pumpen und daher mit hoher Leistung abgebremst werden, während die andere Achse nach anderen oder gleichen Kriterien abgebremst wird, z.B. nach Kriterien, die einen Abbremszeitpunkt berücksichtigen. Die Kriterien werden von der elektronischen Regeleinheit anhand von gemessenen und/oder berechneten Informationen über das Fahrverhalten des Anhängers und/oder des Fahrzeugs vorgegeben.

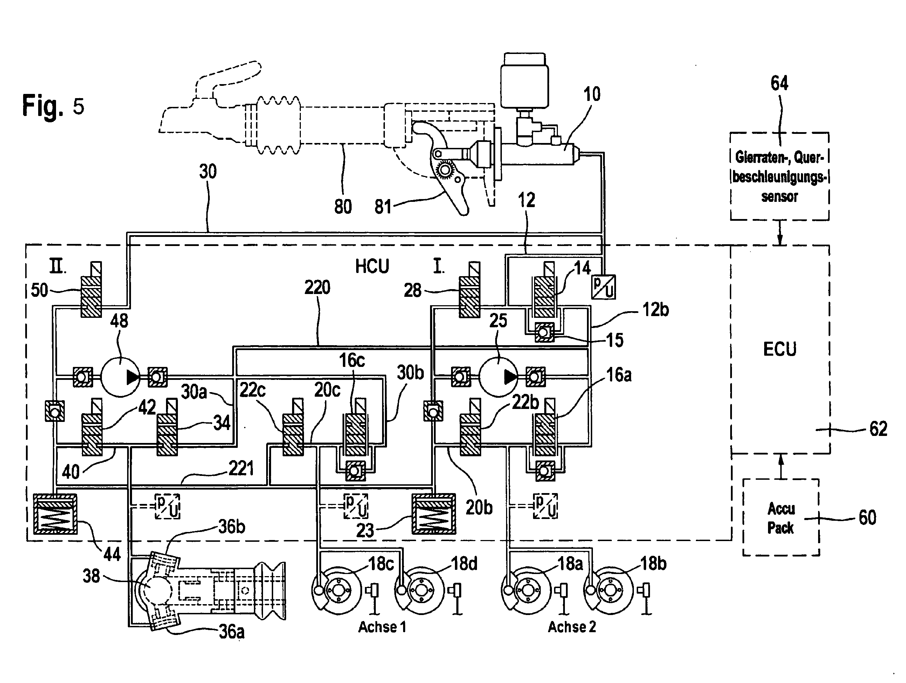

Die hydraulische Anhängerbremsanlage nach Fig. 5 ist zweckmäßig so ausgebildet, dass im Unterschied zu der Ausführungsvariante nach Figur 4 das zweite Trennventil entfällt. Hierzu ist die Bremsanlage so ausgebildet, dass der Hauptbremszylinder mit einer zweiten Druckleitung über ein zweites Umschaltventil mit der Saugseite der zweiten Druckmittelpumpe verbunden ist, dass die Druckseite der Pumpe über die Druckteilleitung mit dem Einlassventil mit den Aktuatoren der Stabilisierungs-Kugelkupplung und über eine Druckteilleitung und dem Einlassventil mit den Radbremsen einer zweiten Anhängerachse verbunden ist, die Aktuatoren und die Radbremsen jeweils mit einer Rücklaufleitung verbunden sind, in der jeweils ein zweites Auslassventil angeordnet ist, wobei die Rücklaufleitungen über die Verbindungsleitung mit dem ersten und zweiten Niederdruckspeicher und über Leitung mit der Saugseite der zweiten Pumpe und dem zweiten Umschaltventil verbunden sind, die an die Leitung angeschlossen ist. Weiterhin ist hierzu vorgesehen, dass zwei Radbremsen über ein in der Bremsleitung angeordnetes erstes Trennventil und ein erstes Umschaltventil mit dem Hauptbremszylinder verbunden sind, dass den Radbremsen ein erstes Einlass- und ein erstes Auslassventil zugeordnet sind, dass in einer Bypassleitung nach dem ersten Umschaltventil und dem ersten Trennventil die erste elektrisch ansteuerbare Druckmittelpumpe vorgesehen ist, deren Saugseite mit dem ersten Umschaltventil, dem ersten Auslassventil und dem ersten Niederdruckspeicher und deren Druckseite mit dem ersten Trennventil und dem ersten Einlassventil verbunden ist und dass die Druckseiten der ersten Druckmittelpumpe und der zweiten Druckmittelpumpe über eine Verbindungsleitung miteinander verbunden sind. Bei dieser Ausführungsvariante wird die Stabilisierungs-Kugelkupplung über die beiden stromlos geschlossenen Ventile, nämlich das Umschaltventil und das Einlassventil, mit dem Hydraulikmittel beaufschlagt, wenn die elektronische Regeleinheit die Steuersignale zum Öffnen des Umschaltventils und des Einlassventils in Abhängigkeit von dem Fahrverhalten des Anhängers und/oder des Fahrzeugs ausgibt.

Eine weitere vorteilhafte Ausbildungsvariante ist derart ausgebildet, dass gegenüber der Ausbildung nach Figur 5 das zweite Umschaltventil entfällt. Damit können die Kosten der Anhängerbremsanlage reduziert werden. Der zweite Stabilisierungs-Kugelkupplungs-Kreis mit der Stabilisierungs-Kugelkupplung und dem zweiten Radbremsenpaar wird über das Öffnen bzw. Schließen des stromlos geschlossenen Umschaltventils des ersten Kreises und das stromlos geschlossenen Einlassventil bzw. das stromlos offene Einlassventil mit dem Rückschlagventil nach entsprechender Ansteuerung über die elektronische Regeleinheit mit Hydraulikmittel versorgt. Hierzu ist die Ausführungsvariante dadurch gekennzeichnet, dass zwei erste Radbremsen über ein in der Bremsleitung angeordnetes Trennventil und ein Umschaltventil mit dem Hauptbremszylinder verbunden sind, dass den ersten Radbremsen ein erstes Einlass- und ein erstes Auslassventil zugeordnet sind, dass in einer Bypassleitung nach dem Umschaltventil und dem Trennventil die erste elektrisch ansteuerbare Druckmittelpumpe vorgesehen ist, deren Saugseite mit dem Umschaltventil, dem ersten Auslassventil und dem ersten Niederdruckspeicher und deren Druckseite mit dem ersten Trennventil und dem ersten Einlassventil verbunden ist und das erste Umschaltventil über eine Verbindungsleitung mit der Saugseite der zweiten Druckmittelpumpe, dem zweiten Niederdruckspeicher und dem zweiten Auslassventil verbunden ist, wobei der zweite Niederdruckspeicher an den ersten Niederdruckspeicher über die Verbindungsleitung angeschlossen ist und die Druckseite der zweiten Druckmittelpumpe über die Verbindungsleitung an die Druckseite der ersten Druckmittelpumpe angeschlossen ist und über die Druckteilleitung mit dem Einlassventil mit den Aktuatoren der Stabilisierungs-Kugelkupplung und über eine Druckteilleitung und dem Einlassventil mit den Radbremsen einer zweiten Anhängerachse verbunden ist, wobei die Radbremsen über die Rücklaufleitung und das Auslassventil an die Verbindungsleitung angeschlossen sind.

Ferner ist eine weitere vorteilhafte Ausführung vorgesehen, bei der die hydraulische Anhängerbremsanlage derart ausgebildet ist, dass der Hauptzylinder mit einer Bremsleitung verbunden ist, die nach dem ersten Trennventil über eine Bremsdruckteilleitung mit einem ersten Einlassventil mit ersten Radbremsen einer ersten Anhängerachse und über eine Bremsdruckteilleitung mit dem ersten Einlassventil mit den zweiten Radbremsen einer zweiten Anhängerachse verbunden ist. Alle Radbremsen sind mit Rücklaufleitungen verbunden, in denen jeweils ein erstes Auslassventil angeordnet ist, wobei die Rücklaufleitungen mit dem ersten Niederdruckspeicher und über eine Leitung mit der Saugseite der ersten Pumpe und dem ersten Umschaltventil verbunden sind, das an die Bremsleitung angeschlossen ist. Der Hauptbremszylinder ist dabei mit einer zweiten Druckleitung verbunden, in der ein zweites Trennventil über eine Druckteilleitung mit einem zweiten Einlassventil mit den Aktuatoren der Stabilisierungs-Kugelkupplung verbunden ist. Die Aktuatoren sind mit einer Rücklaufleitung verbunden, in der ein zweites Auslassventil angeordnet ist, wobei die Rücklaufleitung mit dem zweiten Niederdruckspeicher und über eine Leitung mit der Saugseite der zweiten Pumpe und dem zweiten Umschaltventil verbunden ist. Das Umschaltventil ist an die Leitung angeschlossen. Weiterhin sind die Rücklaufleitungen mit den ersten Auslassventilen über eine Verbindungsleitung mit dem ersten Niederdruckspeicher und dem zweiten Niederdruckspeicher verbunden. Ferner sind die Druckseiten der ersten Druckmittelpumpe und der zweiten Druckmittelpumpe über eine Verbindungsleitung miteinander verbunden. Zwischen dem Einlassventil und der Anschlussstelle der Rücklaufleitung mit dem Auslassventil an die Bremsteilleitung ist vorteilhaft ein zur Stabilisierungs-Kupplung öffnendes Rückschlagventil angeordnet.

Sechs Ausführungsbeispiele der Erfindung sind in der Zeichnung dargestellt und werden im Folgenden näher beschrieben.

Es zeigen
- Fig. 1: eine schematische Darstellung der Schaltung einer beispielgemäßen hydraulischen Anhängerbremsanlage,
- Fig. 2: ein erstes Ausführungsbeispiel der Erfindung mit einem zwei Druckkammern aufweisenden Hauptbremszylinder und einem im Ansteuerkreis der Stabilisierungs-Kugelkupplung vorgesehenen Bremskreis für ein Radbremsenpaar
- Fig. 3: ein zweites Ausführungsbeispiel der Erfindung, eine Ausführungsform des in Figur 2 dargestellten hydraulischen Schaltplans mit einem nur eine Druckkammer aufweisenden Hauptbremszylinder
- Fig. 4: ein drittes Ausführungsbeispiel der Erfindung, eine Ausführungsform des in Figur 3 dargestellten hydraulischen Schaltplans mit "kurzgeschlossenen" Pumpen und Niederdruckspeichern der beiden Kreise
- Fig. 5: ein viertes Ausführungsbeispiel der Erfindung, eine Ausführungsform des in Figur 4 dargestellten hydraulischen Schaltplans mit "kurzgeschlossenen" Pumpen und Niederdruckspeichern der beiden Kreise, ohne das Trennventil des zweiten Stabilisierungs-Kugelkupplungs-Kreises
- Fig. 6: ein fünftes Ausführungsbeispiel der Erfindung, eine Ausführungsform des in Figur 5 dargestellten hydraulischen Schaltplans mit "kurzgeschlossenen" Pumpen und Niederdruckspeichern der beiden Kreise, ohne das Trennventil und das Umschaltventil des zweiten Stabilisierungs-Kugelkupplungs-Kreises ,
- Fig. 7: ein sechstes Ausführungsbeispiel der Erfindung, eine Ausführungsform des in Figur 6 dargestellten hydraulischen Schaltplans, jedoch mit "kurzgeschlossenen" Pumpen und Niederdruckspeichern der beiden Kreise, und speziellem Rücklaufkreis der Stabilisierungs-Kugelkupplung mit Auslassventil und Rückschlagventil.

Die in der Figur 1 dargestellte hydraulische Anhängerbremsanlage zur Fahrstabilisierung weist Druck- bzw. Kraftübertragungskreise auf, die in ihrer Gesamtheit mit 9 bezeichnet sind. Der eine Bremsdruckübertragungskreis I besteht aus einem Bremszylinder 10 einer Auflaufbremse 80, der durch eine mechanische Einheit 81 der Auflaufbremse 80 betätigt wird. An dem Bremszylinder 10 ist ein Vorratsbehälter 27 angeordnet, der ein Druckmittel enthält und in der Bremslösestellung an die Arbeitskammer des Bremszylinders 10 angeschlossen ist. Der dargestellte Bremsdruck-übertragungskreis weist eine an mindestens eine Arbeitskammer des Bremszylinders 10 angeschlossene Bremsleitung 12 mit einem ersten Trennventil 14 auf, das in seiner Ruhestellung einen offenen Durchgang für die Bremsleitung 12 bildet. Dem Trennventil 14 ist ein Rückschlagventil 15 parallel geschaltet, das aus Richtung des Bremszylinders 10 öffnet Das Trennventil 14 wird üblicherweise elektromagnetisch betätigt. Es sind aber auch Variationen denkbar, bei der eine hydraulische Betätigung erfolgt.

Die Bremsleitung 12 verzweigt in drei Bremsdruckteilleitungen 12a, 12b, 12c die zu Radbremsen 18a bis 18d führen. Die Bremsdruckteilleitungen 12a, 12b führen dabei jeweils zu einer Radbremse 18a bzw. 18b einer Anhängerachse, während die Bremsdruckteilleitung 12c zu dem Radbremsenpaar 18c und 18d einer Anhängerachse führt. Die Bremsdruckteilleitungen enthalten jeweils ein elektromagnetisch betätigbares Einlassventil 16a, 16b, 16c die in ihrer Ruhestellung offen sind und durch Erregung des Betätigungsmagneten in eine Sperrstellung geschaltet werden können. Jedem Einlassventil 16a bis 16 c ist ein Rückschlagventil 26a bis 26c parallel geschaltet, das aus Richtung der Radbremsen 18a, 18b bzw. 18cund 18d öffnet. Parallel zu diesen Radbremskreisen 12, 12a bis 12c ist ein sogenannter Rückförderkreis angeschlossen, der aus Rücklaufleitungen 20a bis 20c mit einer Druckmittelpumpe 25 besteht. Die Radbremsen 18a und 18b schließen über jeweils ein Auslassventil 22a und 22b und die Radbremsen 18c und 18d über ein Auslassventil 22c über die Rücklaufleitungen 20a bis 20c an die Leitung 24 an und damit an die Saugseite der Druckmittelpumpe 25, deren Druckseite mit den Bremsdruckteilleitungen 12a bis 12c in einem Einmündungspunkt zwischen dem Trennventil 14 und den Einlassventilen 16a bis 16c verbunden ist.

Die Förderpumpe 25 ist als Hubkolbenpumpe mit nicht näher dargestelltem Druckventil und einem Saugventil ausgebildet. An der Saugseite der Druckmittelpumpe 25 befindet sich ein Niederdruckspeicher 23, der mit den Rücklaufleitungen 20a bis 20c verbunden ist.

In der Verbindung zwischen dem Niederdruckspeicher 23 und der Druckmittelpumpe 25 ist ein vorgespanntes, zu der Pumpe öffnendes Rückschlagventil 29 eingesetzt.

Die Saugseite der Pumpe 25 ist weiterhin über die Zusatzleitung 24 mit einem ersten Umschaltventil 28 mit dem Bremszylinder 10 verbunden.

Der Druck- bzw. Kraftübertragungskreis 9 weist einen zweiten Steuerkreis II mit einer mit dem Vorratsbehälter 27 verbundenen Leitung 30 auf, die sich in eine Druckteilleitung 30a und eine Leitung 46 verzweigt. Druckteilleitung 30a führt über ein zweites Trennventil 32 und einem parallel geschalteten Rückschlagventil 33 zu Aktuatoren 36a, 36b einer Stabilisierungs-Kupplung 38 des Anhängers. Über Verzweigungen der Druckteilleitung 30a können die zwei Aktuatoren 36a, 36b mit dem in den Leitungen 30, 30a erzeugten Druck beaufschlagt werden. Alternativ ist es auch möglich die Aktuatoren einzeln mit dem im Vorratsbehälter 27 enthaltenen Hydraulikmittel beaufschlagen, indem zwei gleiche Druckübertragungskreise vorgesehen werden. Die Druckleitung 30a enthält weiterhin ein elektromagnetisch betätigbares Einlassventil 34, das in seiner Ruhestellung offen ist und durch Erregung des Betätigungsmagneten in eine Sperrstellung geschaltet werden kann. Dem Einlassventil 34 ist ein Rückschlagventil 35 parallel geschaltet, das in Richtung des Vorratsbehälters 27 öffnet. Parallel zu diesem Druckkreis 30, 30a ist ein sogenannter Rückförderkreis angeschlossen, der aus Rücklaufleitungen 40, 46 mit einer Druckmittelpumpe 48 besteht. Die Aktuatoren 36a, 36b schließen über ein in der Leitung 40 angeordnetes Auslassventil 42 an die Leitung 46 an und damit an die Saugseite der Druckmittelpumpe 48, deren Druckseite mit der Bremsdruckteilleitung 30a in einem Einmündungspunkt zwischen dem Trennventil 32 und dem Einlassventil 34 verbunden ist.

Die Förderpumpe 48 ist als Hubkolbenpumpe mit nicht näher dargestelltem Druckventil und einem Saugventil ausgebildet. An der Saugseite der Druckmittelpumpe 48 befindet sich ein Niederdruckspeicher 44, der mit den Rücklaufleitungen 40, 46 verbunden ist.

In der Verbindung zwischen dem Niederdruckspeicher 44 und der Druckmittelpumpe 48 ist ein vorgespanntes, zu der Pumpe öffnendes Rückschlagventil 49 eingesetzt.

Die Saugseite der Pumpe 48 ist weiterhin über die Leitung 46 und einem zweiten Umschaltventil 50 mit dem Vorratsbehälter 27 verbunden.

In der beispielgemäßen hydraulischen Anhängerbremsanlage sind der Druckkreis für die Aktuatoren 36a, 36b der Stabilisierungs-Kupplung 38 und der Bremsdruckkreis für die Radbremsen 18a bis 18d gleich aufgebaut. Während bei dem Bremsdruckkreis drei Radbremsen 18a bis 18d, nämlich jeweils die Radbremse 18a und die Radbremse 18b separat und ein Radbremsenpaar 18c und 18d angesteuert werden, wird in dem Druckkreis der Stabilisierungs-Kupplung lediglich ein "Aktuator", nämlich die beiden Zylinder-Kolbeneinheiten, angesteuert.

Außerdem weist der Druck- bzw. Kraftübertragungskreis 9 eine elektronische Regeleinheit 62 auf. In der elektronischen Regeleinheit wird auf der Basis der den nur schematisch dargestellten Rädern 90 bis 93 zugeordneten Raddrehzahlsensoren 94 bis 97 und der den Druck- bzw. Bremskreisen zugeordneten Drucksensoren 98, 99, 100, 101 bzw. den weiteren Sensoren 64, z.B den Sensoren eines Sensorclusters, wie z.B. Querbeschleunigungssensoren, Gierratensensoren, Längsbeschleunigungssensoren Steuer- bzw. Regelsignale für die Ventile und die Pumpen 25, 48 erzeugt. Die Energieversorgung der elektronischen Regeleinheit 62 erfolgt dabei über Akkumulatoren, d.h einem Akku-Pack 60, der über eine Versorgungsleitung zwischen dem Fahrzeug und dem Anhänger mit der Fahrzeugbatterie verbunden ist.

Die Vorrichtung arbeitet wie folgt:
Bremsen:
   Das Abbremsen des Anhängers mit der Auflaufbremse 80 erfolgt immer dann, wenn die Anhängergeschwindigkeit höher ist als die Fahrgeschwindigkeit des Zugfahrzeugs. In diesem Fall wird mittels der mechanischen Einheit 81 der Auflaufbremse 80 von dem Hauptzylinder 10 Druckmittel über Bremsleitung 12, offenes Trennventil 14, offene Einlassventile 16a bis 16c zu den Radbremsen 18a bis 18d verschoben. Der Anhänger wird über alle vier Räder 90 bis 93 abgebremst.
ABS-Regelung:
   Mittels der Regeleinheit 62 zur Verfügung gestellten Drehzahlsignale der Raddrehzahlsensoren 90 bis 93 werden die Umfangsgeschwindigkeiten jedes einzelnen Rades ermittelt und mit der in der Regeleinheit 62 berechneten Fahrgeschwindigkeit im Hinblick auf Bremsschlupf logisch ausgewertet. Steigt der Bremsschlupf in der Regel über 8 bis 30 Prozent oder blockiert dabei ein Rad der Radbremsen 18a bis 18d (100 Prozent Bremsschlupf), wird das jeweilige Einlassventil 16a bis 16c geschlossen, so dass das von dem Hauptzylinder 10 in die Bremsleitung 12 geförderte Druckmittel nicht mehr zu dem entsprechenden Rad gelangt. Durch Öffnen des jeweiligen Auslassventils 22a bis 22c erfolgt eine Druckabsenkung, indem Druckmittel aus der jeweiligen Radbremse 18a bis 18d in den Niederdruckspeicher 23 abgelassen wird. Das Druckmittel des Niederdruckspeichers 23 kann zu einem späteren Zeitpunk mittels der Pumpe in den Vorratsbehälter 27 zurückgefördert werden.
Stabilitätsbremsung:
   Der Druckaufbau in den Radbremskreisen für die Radbremsen 18a, 18b, 18c und 18d erfolgt bei geöffnetem Umschaltventil 28 und geschlossenem Trennventil 14 über die Ansteuersignale des Regelungseinheit 62 bei dem in Ausgangslage stromlos offenen Trennventil 14 und stromlos geschlossenen Umschaltventil 28. Dabei wird mittels der Druckmittelpumpe 25 über den Hauptzylinder 10 aus dem Vorratsbehälter 27 oder dem Niederdruckspeicher 23 Druckmittel in die Radbremskreise gefördert, in denen so entsprechend der berechneten Bremsdruckanforderung Druckmittel eingesteuert wird. Die Ansteuerung erfolg dabei in Abhängigkeit der ermittelten Schlingerbewegung des Anhängers. Die Schlingerbewegung wird anhand der Querbeschleunigungs-oder Giergeschwindigkeits- oder Raddrehzahlsignalen der entsprechenden Sensoren 94 bis 97, 64 ermittelt, die in der Regelungseinheit nach einem Programm logisch ausgewertet und bewertet werden. In Abhängigkeit von dem Auswerteergebnis werden dann die Radbremsen 18a oder 18b einzeln und zwar nach einem Programm im Wesentlichen gegenphasig zur Schlingerbewegung angesteuert, um die Schlingerbewegung zu bedämpfen. Eine andere Möglichkeit besteht darin, die Radbremsen gleichzeitig anzusteuern. Gleichzeitig oder auch vor- oder nachgeschaltet können die beiden Radbremsen 18c und 18d über den gemeinsamen Bremskreis angesteuert werden, um die Anhängergeschwindigkeit zu verringern.

Ist der Anhänger bedämpft, wird Bremsdruck über das Öffnen der jeweiligen Auslassventile 22a bis 22c, der Rücklaufleitungen 20a bis 20c in den Niederdruckspeicher 23 abgelassen, wobei die Einlassventile 16a bis 16c geschlossen werden.

Wenn durch die Kugelkupplung 38 die Schlingerbewegung des Anhängers vermindert werden soll, wird das Trennventil 32 geschlossen und Umschaltventil 50 geöffnet und die Pumpe 48 fördert Druckmittel aus dem Vorratsbehälter 27 zu den Aktuatoren 36a, 36b. Die Kugelkupplung wir mit erhöhter Reibkraft gespannt.

Die folgenden, in den Figuren 2 bis 7 dargestellten, bevorzugten Ausführungsformen der Erfindung weisen zwar alle die im Zusammenhang mit Figur 1 beschriebenen zwei separaten Ansteuerkreise auf, im Unterschied zu der beispielgemäßen hydraulischen Anhängerbremsanlage umfassen die beiden hydraulischen Ansteuerkreise jedoch beide die Ansteuerung von Radbremsen 18a bis 18d, wobei bei einem Ansteuerkreis zusätzlich die Ansteuerung der Stabilisierungs-Kupplung 38 oder weiterer Komponenten vorgesehen ist. Die hydraulischen Anhängerbremsanlagen nach bevorzugten Ausführungsformen der Erfindung arbeiten im Wesentlichen entsprechend nach der zuvor in Verbindung mit Figur 1 beschrieben Funktionsweise. Aus der Modifikation der Schaltung sich ergebende Abweichungen in der Funktionsweise werden jeweils einzeln beschrieben. Für gleiche Komponenten, werden gleiche Bezugszeichen verwendet, wobei aus Übersichtsgründen nicht alle Bezugszeichen in die alternativen Ausführungsvarianten eingetragen werden. Es ist für den Fachmann einfach möglich, die Bezugszeichen aus der Figur 1 auf die jeweiligen Komponenten bzw. Bauteile der entsprechenden Schaltung zu übertragen. Selbstverständlich können auch einzelne Schaltkreise der Figuren 2 bis 7 ersetzt werden, so können mit den Anhängerbremsanlagen eine Achse mit zwei Rädern oder mehr als eine Achse mit mehr Rädern angesteuert werden. Hierzu müssen lediglich identische Ansteuerkreise vorgesehen werden. Durch die Aufteilung der Ansteuerung der Radbremsen 18a, 18b oder 18c, 18d auf zwei Ansteuerkreise mit jeweils einer Druckmittelpumpe 25, 48 können druckdynamische Vorteile erzielt werden.

Figur 2 zeigt eine hydraulische Anhängerbremsanlage mit einem Tandem-Hauptbremszylinder 10, der zwei Druckkammern mit zwei separaten Ausgängen 200, 201 aufweist. Die beiden Steuerkreise I, II werden über die beiden Druckkammern des Hauptbremszylinders 10 mit Hydraulikmittel versorgt. In dem die Radbremsen 18a, 18b mit Hydraulikmittel versorgenden Steuerkreis I ist die Bremsleitung 12 mit dem Ausgang 201 der ersten Druckkammer und in dem Steuerkreis II die Druckleitung 30 mit dem Ausgang 200 der zweiten Druckkammer verbunden. Der Bremskreis I mit der Bremsleitung 12 weist nach dem ersten Trennventil 14 mit dem Rückschlagventil 15 eine Bremsdruckteilleitung 12b auf, die über das in ihr angeordnete erste Einlassventil 16a mit den Radbremsen 18a, 18b einer ersten Anhängerachse verbunden ist. Die Radbremsen 18a, 18b sind mit einer Rücklaufleitung 20b verbunden, in der ein erstes stromlos geschlossenes Auslassventil 22b angeordnet ist. Die Rücklaufleitung 20b ist mit dem ersten Niederdruckspeicher 23 und über Leitung 24 mit der Saugseite der ersten Pumpe 25 verbunden. In der Leitung 24 ist ein zur Saugseite der Pumpe öffnendes Rückschlagventil 29 vorgesehen, über das Leitung 24 auch mit dem ersten Umschaltventil 28 verbunden ist. Das Umschaltventil 28 ist an die Bremsleitung 12 angeschlossen ist. Der zweite hydraulische Steuerkreis II sieht entsprechend der Ausführung nach Figur 1 eine hydraulischen Schaltung für die Stabilisierungs-Kupplung 38 derart vor, dass die Druckleitung 30 über ein zweites Trennventil 32 mit Rückschlagventil 33 in einer Druckteilleitung 30a mit einem zweiten Einlassventil 34 mit den Aktuatoren 36a, 36b der Stabilisierungs-Kugelkupplung 38 verbunden ist. Das Einlassventil 34 ist im Gegensatz zu der Ausbildung in Figur 1 als stromlos geschlossenes Absperrventil ohne Rückschlagventil ausgebildet. Mit dem als Absperrventil ausgebildeten Einlassventil 34 kann der Druck in den Aktuatoren 36a, 36b bei geöffnetem Trennventil 32 eingesperrt werden. Über eine weitere Druckteilleitung 30b und ein zweites stromlos offenes Einlassventil 16c mit Rückschlagventil 26b ist die Druckleitung 30 mit den Radbremsen 18c, 18d einer zweiten Anhängerachse verbunden. Ein Drucksensor 101 zum Ermitteln des Drucks in den Aktuatoren 36a, 36b ist zwischen den Aktuatoren und dem Absperrventil 34 in der Druckteilleitung 30a angeordnet. Die Aktuatoren 36a, 36b und die Radbremsen 18c, 18d des zweiten Steuerkreises II sind jeweils mit einer Rücklaufleitung 20c, 40 verbunden, in der jeweils ein zweites Auslassventil 22c, 42 angeordnet ist. Beide Rücklaufleitungen 20c, 40 sind jeweils mit dem zweiten Niederdruckspeicher 44 und über Leitung 46 mit der Saugseite der zweiten Pumpe 48 und dem zweiten Umschaltventil 50 verbunden. Das Umschaltventil 50 ist an die Leitung 30 angeschlossen.

### Bremsen:

Das Abbremsen des Anhängers mit der Auflaufbremse 80 erfolgt immer dann, wenn die Anhängergeschwindigkeit höher ist als die Fahrgeschwindigkeit des Zugfahrzeugs. In diesem Fall wird mittels der mechanischen Einheit 81 der Auflaufbremse 80 von der ersten Druckkammer des Tandem- Hauptbremszylinders 10 Druckmittel über Bremsleitung 12, offenes Trennventil 14, offenes Einlassventil 16a zu den Radbremsen 18a, 18b verschoben. Das Umschaltventil 28 und das stromlos geschlossene Auslassventil 22b sind geschlossen. Weiterhin wird von der zweiten Druckkammer des Tandem-Hauptbremszylinders 10 über die Druckleitung 30, das offene Trennventil 32 und das offenen Einlassventil 16c Hydraulikmittel in die Radbremsen 18c und 18d eingesteuert. Über die Schaltintervalle "offen/zu" des Einlassventils 16c kann nun ein vorgegebener, mit dem Drucksensor 99 ermittelter Druck in den Radbremsen 18c, 18d eingestellt werden. Das Auslassventil 22c und das Absperrventil 34 der Stabilisierungs-Kupplung sind geschlossen. Der Anhänger kann über alle vier Räder 90 bis 93 gebremst werden.

### Stabilitätsbremsung:

Der Druckaufbau in den bei dieser Ausführungsvariante getrennten Radbremskreisen für die Radbremsen 18a und 18b bzw. 18c und 18d erfolgt bei geöffneten Umschaltventilen 28 bzw. 50, geschlossenen Trennventilen 14 bzw. 32 über die Ansteuersignale des Regelungseinheit 62 bei den in Ausgangslage stromlos offenen Trennventilen 14, 32 und stromlos geschlossenen Umschaltventilen 28, 50. Dabei wird mittels der beiden Druckmittelpumpen 25, 48 über den Hauptzylinder 10 aus dem Vorratsbehälter 27 oder den Niederdruckspeichern 23,44 Druckmittel in die Steuerkreise I, II der Radbremskreise gefördert, in denen so entsprechend der berechneten Bremsdruckanforderung Druckmittel eingesteuert wird. Über die Drucksensoren 98, 99 wird ermittelt, ob die Bremsdruckanforderungen in den Radbremsen 18a bis 18d eingestellt sind. Die Ansteuerung erfolg dabei in Abhängigkeit der ermittelten Schlingerbewegung des Anhängers. Die Schlingerbewegung wird anhand von Querbeschleunigungs-oder Giergeschwindigkeits- oder Raddrehzahlsignalen der entsprechenden Sensoren 94 bis 97, 64 ermittelt, die in der Regelungseinheit nach einem Programm logisch ausgewertet und bewertet werden. In Abhängigkeit von dem Auswerteergebnis werden dann die Radbremsen 18a bis 18d einer Anhängerachse nach einem Programm angesteuert, um die Schlingerbewegung zu bedämpfen. Eine andere Möglichkeit besteht darin, die Radbremsen einzeln anzusteuern. Gleichzeitig oder auch vor- oder nachgeschaltet können z.B. die beiden Radbremsen 18c und 18d des zweiten Steuerkreises II angesteuert werden, um die Anhängergeschwindigkeit zu verringern. Parallel dazu kann im Steuerkreis II das Absperrventil 34 geöffnet und in die Aktuatoren 36a, 36b Hydraulikmittel eingesteuert werden. Über das Absperrventil 34 kann nun ein vorgegebener, mit dem Drucksensor 101 ermittelter Druck in den Aktuatoren 36a, 36b eingesperrt werden. Hierdurch kann durch die Stabilisierungs-Kugelkupplung 38 die Schlingerbewegung des Anhängers vermindert werden, indem die Kugelkupplung mit erhöhter Reibkraft gespannt wird.

Ist der Anhänger bedämpft, wird Bremsdruck über das Öffnen der jeweiligen Auslassventile 22b, 22c der Rücklaufleitungen 20b, 20c in die Niederdruckspeicher 23, 44 abgelassen, wobei die Einlassventile 16a, 16c geschlossen werden.

Figur 3 zeigt eine Ausführungsvariante der Figur 2, bei der kein Tandem-Hauptbremszylinder mit zwei, sondern ein Hauptbremszylinder 10 mit nur einer Druckkammer als wesentlicher Unterschied vorgesehen ist. Dabei ist der Hauptbremszylinder 10 mit der zweiten Druckleitung 30 über die Bremsleitung 12 verbunden. In Druckleitung 30 ist somit das zweite Trennventil 32 in der Druckteilleitung 30a über das zweite Einlassventil 34 mit den Aktuatoren 36a, 36b der Stabilisierungs-Kugelkupplung 38 und über die Druckteilleitung 30b und dem zweiten Einlassventil 16c mit den Radbremsen 18c, 18d der zweiten Anhängerachse verbunden. Die Aktuatoren 36a, 36b und die Radbremsen 18c, 18d sind jeweils mit einer Rücklaufleitung 20c, 40 verbunden, in denen jeweils ein zweites Auslassventil 22c, 42 angeordnet ist, wobei die Rücklaufleitungen 20c, 40 mit dem zweiten Niederdruckspeicher 44 verbunden sind. Weiterhin sind, wie in Figur 2 bereits beschrieben, die Rücklaufleitungen 20c, 40 über Leitung 46 mit der Saugseite der zweiten Pumpe 48 und dem zweiten Umschaltventil 50 verbunden. Umschaltventil 50 ist an die zweite Druckleitung 30 angeschlossen.

Da der Steuerkreis I gleich dem in Figur 2 dargestellten und beschriebenen Steuerkreis I mit Ausnahme des bereits genannten Anschlusses der Druckleitung 30 an die Bremsleitung 12 aufgebaut ist, kann im Zusammenhang mit der Figur 3 auf die Beschreibung der Figur 2 verwiesen werden. Auch die Arbeitsweise der hydraulischen Anhängerbremsanlage entspricht der in Zusammenhang mit der Figur 2 beschriebenen, außer, dass die beiden Steuerkreise I, II nicht von unterschiedlichen Druckkammern sondern von einer gemeinsamen Druckkammer des Hauptbremszylinders 10 mit einem Fluid versorgt werden.

Figur 4 zeigt eine vorteilhafte hydraulische Anhängerbremsanlage, die gegenüber der Ausführungsvariante nach der Figur 3 vorsieht, dass die Rücklaufleitungen 20b, 20c mit dem ersten Auslassventil 22b und dem zweiten Auslassventil 22c über eine Verbindungsleitung 221 mit dem ersten Niederdruckspeicher 23 und dem zweiten Niederdruckspeicher 44 verbunden sind. Dabei sind auch die Druckseiten der ersten Druckmittelpumpe 25 und der zweiten Druckmittelpumpe 48 über eine Verbindungsleitung 220 miteinander verbunden. Hierbei ist die Verbindungsleitung 220 zwischen dem ersten Trennventil 14 mit dem Rückschlagventil 15 und der Anschlussstelle der Bypassleitung mit der ersten Druckmittelpumpe 25 an die Bremsleitung 12b des ersten Steuerkreises I angeschossen. Die andere Seite der Verbindungsleitung 220 ist zwischen dem zweiten Trennventil 32 und der Anschlussstelle der Bypassleitung mit der zweiten Druckmittelpumpe 48 an die Druckteilleitung 30a des zweiten Steuerkreises II angeschlossen. Durch die hydraulisch "kurzgeschlossenen" Druckmittelpumpen 25, 48 kann in eine der beiden Radbremsen 18a, 18b oder 18c, 18d Druckmittel mit den beiden Pumpen gefördert werden, wodurch ein schnellerer Druckaufbau in dem Radbremsenpaar und damit eine verbesserte Dämpfung der Anhängers beim Schlingern erzielt wird. Entsprechend sind die Niederdruckspeicher 23, 44 "kurzgeschlossen", um einen ausgeglichenen Druckabbau mit besserer Volumenverteilung zu erreichen. Mit dieser Ausbildung kann die elektronische Regeleinheit 62 ein Radbremsenpaar 18a, 18b oder 18c, 18d einer Achse nach bestimmten Kriterien hochdynamisch mit den beiden Druckmittelpumpen 25, 48 abzubremsen, während die andere Achse mit dem anderen Radbremsenpaar nach gleichen oder anderen Kriterien zu einem anderen Zeitpunkt gebremst werden kann.

Figur 5 zeigt eine Weiterbildung der hydraulischen Anhängerbremsanlage nach Figur 4. Im Unterschied zu der Ausbildung in Figur 4 entfällt hier das zweite Trennventil 32 des zweiten Steuerkreises II. Somit ist der Hauptbremszylinder 10 mit der zweiten Druckleitung 30 über ein zweites Umschaltventil 50 mit der Saugseite der zweiten Druckmittelpumpe 48 verbunden. Die Druckseite der Pumpe 48 ist über die Druckteilleitung 30a mit dem als Absperrventil ausgebildeten stromlos geschlossenen Einlassventil 34 an die Aktuatoren 36a, 36b der Stabilisierungs-Kugelkupplung 38 angeschlossen. Die Druckteilleitung 30b mit dem Einlassventil 16c verbindet die Radbremsen 18c, 18d einer zweiten Anhängerachse mit der Druckteilleitung 30a. Die Aktuatoren 36a, 36b und die Radbremsen 18c, 18d sind jeweils mit einer Rücklaufleitung 20c, 40 verbunden, in der jeweils ein zweites Auslassventil 22c, 42 angeordnet ist. Die Rücklaufleitungen 20c, 40 sind über die Verbindungsleitung 221 mit dem ersten und zweiten Niederdruckspeicher 23, 44 und über Leitung 46 mit der Saugseite der zweiten Pumpe 48 und dem zweiten Umschaltventilen 50 verbunden. Das Umschaltventil 50 ist an die Leitung 30 angeschlossen. Der Steuerkreis I sieht wie bei Figur 4 beschrieben vor, dass die zwei Radbremsen 18a, 18b über ein in der Bremsleitung 12, 12b angeordnetes stromlos offenes Trennventil 14 mit Rückschlagventil 15 und ein Umschaltventil 28 mit dem Hauptbremszylinder 10 verbunden sind, dass den Radbremsen 18a, 18b ein erstes Einlass- und ein erstes Auslassventil 16a; 22b zugeordnet sind, dass in der Bypassleitung nach dem Umschaltventil 28 und dem Trennventil 14 die erste elektrisch ansteuerbare Druckmittelpumpe 25 vorgesehen ist, deren Saugseite mit dem Umschaltventil 28, dem ersten Auslassventil 22b und dem ersten Niederdruckspeicher 23 und deren Druckseite mit dem ersten Trennventil 14 und dem ersten Einlassventil 16 verbunden ist. Die Druckseiten der Pumpen 25, 48 sind über die Verbindungsleitung 220 entsprechend der Ausbildung in Figur 4 "kurzgeschlossen".

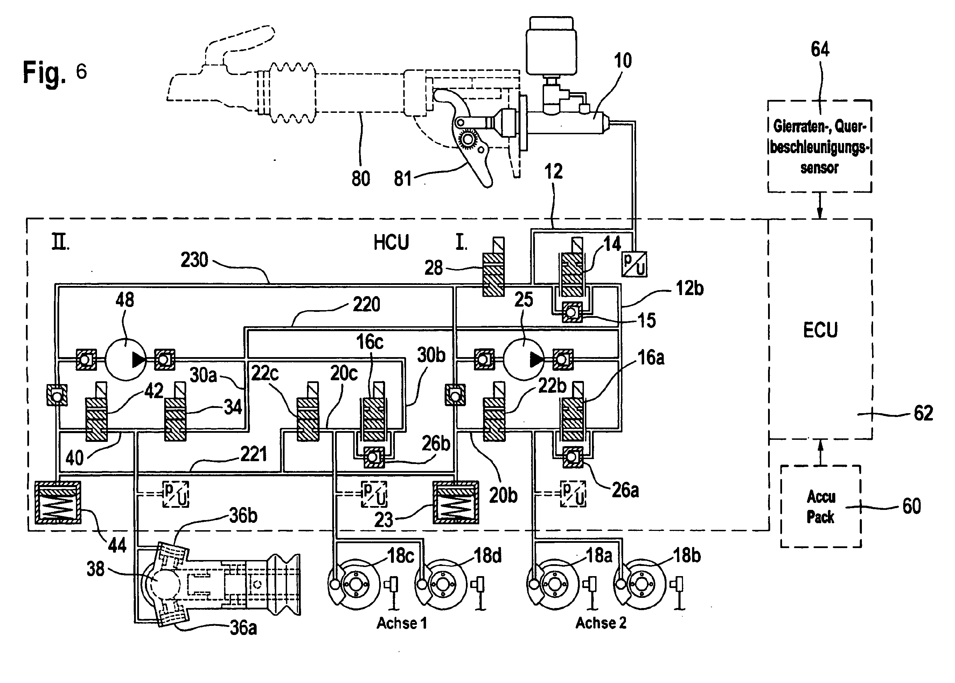

Figur 6 zeigt eine Weiterbildung der hydraulischen Anhängerbremsanlage nach Figur 5. Im Unterschied zu der Ausbildung der Figur 5 ist in Figur 6 kein Umschaltventil 50 im zweiten Steuerkreis II vorgesehen. Dadurch ist das erste Umschaltventil 28 über eine Verbindungsleitung 230 direkt mit der Saugseite der zweiten Druckmittelpumpe 48, dem zweiten Niederdruckspeicher 44 und dem zweiten Auslassventil 42 verbunden. Der zweite Niederdruckspeicher 44 ist an den ersten Niederdruckspeicher 23 über die Verbindungsleitung 221 angeschlossen und die Druckseite der zweiten Druckmittelpumpe 48 über die Verbindungsleitung 220 an die Druckseite der ersten Druckmittelpumpe 25. Die Druckteilleitung 30a mit dem als Absperrventil ausgebildeten stromlos geschlossenen Einlassventil 34 verbindet die Aktuatoren 36a, 36b der Stabilisierungs-Kugelkupplung 38 mit den Pumpen 25, 48, während die Druckteilleitung 30b mit dem stromlos offenen Einlassventil 16c mit dem Rückschlagventil 26b die Radbremsen 18c, 18d einer zweiten Anhängerachse ebenfalls mit den Pumpen 25, 48 verbindet. Die Radbremsen 18c, 18d sind über die Rücklaufleitung 20c und das Auslassventil 22c an die Verbindungsleitung 221 angeschlossen sind.

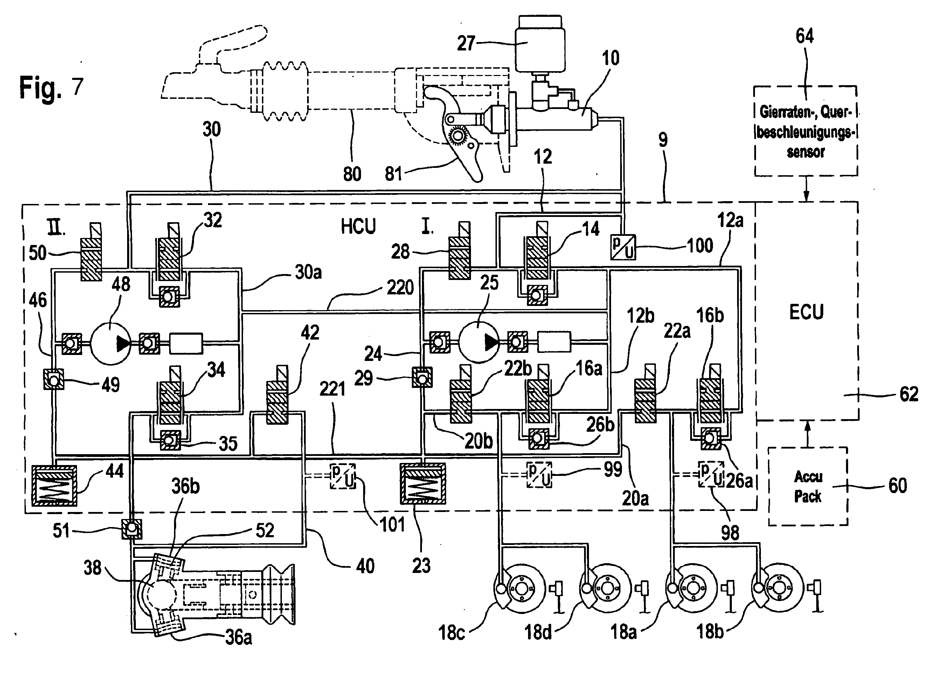

Figur 7 zeigt eine weitere Ausführungsvariante der "kurzgeschlossenen" hydraulischen Anhängerbremsanlage. Der Steuerkreis I entspricht im Wesentlichen der Ausbildung gemäß Figur 6. Der Druck- bzw. Kraftübertragungsvorrichtung 9 ist so ausgebildet, dass die Radbremsen 18a und 18b sowie 18 c und 18d entsprechend den in Figur 1 beschrieben Radbremsen 18c und 18d geschaltet sind. Der eine Bremsdruckübertragungskreis besteht aus einem Bremszylinder 10 einer Auflaufbremse 80, der durch eine mechanische Einheit 81 der Auflaufbremse 80 betätigt wird. An dem Bremszylinder 10 ist ein Vorratsbehälter 27 angeordnet, der ein Druckmittel enthält und in der Bremslösestellung an die Arbeitskammer des Bremszylinders 10 angeschlossen ist. Der dargestellte Bremsdruckübertragungskreis weist die an mindestens eine Arbeitskammer des Bremszylinders 10 angeschlossene Bremsleitung 12 mit einem ersten Trennventil 14 auf, das in seiner Ruhestellung einen offenen Durchgang für die Bremsleitung 12 bildet. Dem Trennventil 14 ist ein Rückschlagventil 15 parallel geschaltet, das aus Richtung des Bremszylinders 10 öffnet Das Trennventil 14 wird üblicherweise elektromagnetisch betätigt. Es sind aber auch Variationen denkbar, bei denen eine hydraulische Betätigung erfolgt.

Die Bremsleitung 12 verzweigt in zwei Bremsdruckteilleitungen 12a, 12b die jeweils zu zwei Radbremsen 18a, 18b und 18c, 18d einer Anhängerachse führen. Die Bremsdruckteilleitungen enthalten jeweils ein elektromagnetisch betätigbares Einlassventil 16a, 16b die in ihrer Ruhestellung offen sind und durch Erregung des Betätigungsmagneten in eine Sperrstellung geschaltet werden können. Jedem Einlassventil 16a, 16b ist ein Rückschlagventil 26a, 26b parallel geschaltet, das aus Richtung der Radbremsen 18a, 18b bzw. 18c, 18d öffnet. Parallel zu diesen Radbremskreisen 12, 12a, 12b ist der Rückförderkreis angeschlossen, der aus Rücklaufleitungen 20a, 20b besteht, die mit der Druckmittelpumpe 25 verbunden sind. Die Radbremsen 18a und 18b schließen über das Auslassventil 22a und die Radbremsen 18c und 18d über das Auslassventil 22b über die Rücklaufleitungen 20a, 20b an die Leitung 24 an und damit an die Saugseite der Druckmittelpumpe 25, deren Druckseite mit den Bremsdruckteilleitungen 12a, 12b in einem Einmündungspunkt zwischen dem Trennventil 14 und den Einlassventilen 16a, 16b verbunden ist.

Die Förderpumpe 25 ist als Hubkolbenpumpe mit nicht näher dargestelltem Druckventil und einem Saugventil ausgebildet. An der Saugseite der Druckmittelpumpe 25 befindet sich ein Niederdruckspeicher 23, der mit den Rücklaufleitungen 20a, 20b verbunden ist.

In der Verbindung zwischen dem Niederdruckspeicher 23 und der Druckmittelpumpe 25 ist ein vorgespanntes, zu der Pumpe öffnendes Rückschlagventil 29 eingesetzt.

Die Saugseite der Pumpe 25 ist weiterhin über die Zusatzleitung 24 mit dem ersten Umschaltventil 28 mit dem Bremszylinder 10 verbunden.

Der zweite Steuerkreis II des Druck- bzw. Kraftübertragungskreises 9 weist eine mit dem Hauptbremszylinder verbundene Leitung 30 auf, die sich in eine Druckteilleitung 30a und eine Leitung 46 verzweigt. Druckteilleitung 30a führt über ein zweites stromlos offenes Trennventil 32 und einem parallel geschalteten Rückschlagventil 33 zu Aktuatoren 36a, 36b der Stabilisierungs-Kupplung 38 des Anhängers. Über Verzweigungen der Druckteilleitung 30a können die zwei Aktuatoren 36a, 36b mit dem in den Leitungen 30, 30a erzeugten Druck beaufschlagt werden. Alternativ ist es auch möglich die Aktuatoren einzeln mit dem im Vorratsbehälter 27 enthaltenen Hydraulikmittel beaufschlagen, indem zwei gleiche Druckübertragungskreise vorgesehen werden. Die Druckleitung 30a enthält weiterhin ein elektromagnetisch betätigbares Einlassventil 34, das in seiner Ruhestellung offen ist und durch Erregung des Betätigungsmagneten in eine Sperrstellung geschaltet werden kann. Dem Einlassventil 34 ist ein Rückschlagventil 35 parallel geschaltet, das in Richtung des Vorratsbehälters 27 öffnet. Parallel zu diesem Druckkreis 30, 30a ist der Rückförderkreis angeschlossen, der aus Rücklaufleitungen 40, 46 mit der in der Leitung 46 angeordneten Druckmittelpumpe 48 besteht. Die Aktuatoren 36a, 36b schließen über ein in der Leitung 40 angeordnetes, stromlos geschlossenem Auslassventil 42 und den zweiten Niederdruckspeicher 44 an die Leitung 46 an und damit an die Saugseite der Druckmittelpumpe 48, deren Druckseite mit der Bremsdruckteilleitung 30a in einem Einmündungspunkt zwischen dem Trennventil 32 und dem Einlassventil 34 verbunden ist. Weiterhin ist ein in Richtung Stabilisierungs-Kupplung 38 öffnendes Rückschlagventil 51 nach der Anschlussstelle der Rücklaufleitung 40 und vor dem Einlassventil 34 in der Druckteilleitung 30a vorgesehen. Die Niederdruckspeicher 23, 44 und die Druckseiten der Pumpen 25, 48 sind, wie zuvor in den Ausführungsvarianten der Figuren 11 bis 13 beschrieben, über die Verbindungsleitungen 220, 221 miteinander verbunden.

Die Stabilisierungs-Kupplung kann bei allen Ausführungsvarianten eine Entlüftungsschraube aufweisen.

Die vorteilhafte Ausbildung nach Figur 7 kann selbstverständlich dahingehend modifiziert werden, dass sie auch für einen Anhänger mit nur einer Achse und damit zwei Radbremsen verwendet werden kann. Hierzu ist im Gegensatz zu Figur 7 statt des Radbremsenpaares 18c, 18d bzw. 18a, 18b lediglich nur eine Radbremse z.B. 18c, 18a der einen Achse an en Hauptbremszylinder 10 angeschlossen. Weiterhin ist eine Ausbildung möglich, die die Verbindungsleitungen 220, 221 nicht aufweist. In diesem Fall sind die Niederdruckspeicher 23, 44 bzw. Pumpen 25, 48 nicht kurzgeschlossen.

Weiterhin kann der hydraulische Schaltplan gemäß Figur 7 auch, wie dargestellt, mit zwei Umschaltventilen 28, 50 jedoch mit nur einem Trennventil 14 (siehe Figur 6) oder mit einem Umschaltventil 50 und einem Trennventil 14 (siehe Figur 5) realisiert werden.

Grundsätzlich sind alle beschriebenen Steuerkreise I, II miteinander kombinierbar.

Auch ist nach einer vorteilhaften Ausbildung anstatt oder in Kombination mit zwei Radbremsen ein hydraulischer Zylinder für eine Seilzugbremse anschließbar, wie sie z.B. bei einer elektronischen Parkbremse verwendet wird. So können zwei Räder über die Radbremsen gebremst werden, die Stabilisierungs-Kupplung angesteuert werden und eine Seilzugbremse des Anhängers betätigt werden.

## Patentansprüche

1. Hydraulische Anhängerbremsanlage mit einer Einrichtung (80) zum Abbremsen der Räder des Anhängers und mit einem steuerbaren Druckerzeuger (9) zur rad- oder achsindividuellen Ansteuerung von Radbremsen(18a, 18b, 18c, 18d), wobei der Einrichtung (80) eine hydraulische Bremskraftübertragungsvorrichtung mit einem Vorratsbehälter (27) für das Druckmittel und ein Hauptbremszylinder (10) zugeordnet sind und die Bremskraftübertragungsvorrichtung über Bremsleitungen mit den Radbremsen (18a, 18b, 18c, 18d) verbunden ist, sowie einer elektronischen Steuer- oder Regelungseinheit (62), die über eine Versorgungseinheit (60) Energie erhält, **dadurch gekennzeichnet, dass** mindestens zwei erste Radbremsen (18a, 18b) über ein in einer (12) der Bremsleitungen angeordnetes erstes Trennventil (14) mit dem Hauptbremszylinder (10) verbunden sind,
dass den ersten Radbremsen (18a, 18b) mindestens ein erstes Einlass- und ein erstes Auslassventil (16a; 22b) zugeordnet sind,
dass in einer Bypassleitung um das erste Trennventil (14) ein erstes Umschaltventil (28) und eine erste elektrisch ansteuerbare Druckmittelpumpe (25) vorgesehen sind, deren Saugseite mit dem ersten Umschaltventil (28), dem mindestens einen ersten Auslassventil (22b) und einem ersten Niederdruckspeicher (23) und deren Druckseite mit dem ersten Trennventil (14) und dem mindestens einen ersten Einlassventil (16a) verbunden ist,
dass eine Stabilisierungskupplung (38) zwischen Anhänger und Zugfahrzeug Aktuatoren (36a, 36b) aufweist,
die mit einer zweiten Druckmittelpumpe (48) verbunden sind und die die Spannkraft der Stabilisierungskupplung (38) verändern können, wenn die zweite Druckmittelpumpe (48) Druckmittel in die Aktuatoren fördert, und dass die Saugseite der zweiten Druckmittelpumpe (48) über das erste oder ein zweites Umschaltventil (28, 50) mit dem Hauptbremszylinder (10) verbunden werden kann.

2. Hydraulische Anhängerbremsanlage nach Anspruch 1, **dadurch gekennzeichnet, dass** der Hauptbremszylinder (10) zwei Druckkammern mit zwei Ausgängen (200, 201) aufweist, wobei die eine Bremsleitung (12) mit dem ersten Ausgang (201) und eine Druckleitung (30) mit dem zweiten Ausgang (200) verbunden ist und die eine Bremsleitung (12) nach dem ersten Trennventil (14) über eine erste Bremsteilleitung (12b) mit dem ersten Einlassventil(16a) mit den ersten Radbremsen (18a, 18b) verbunden ist und dass die ersten Radbremsen (18a, 18b) mit einer ersten Rücklaufleitung (20b) verbunden sind, in der das erste Auslassventil (22b) angeordnet ist, wobei die erste Rücklaufleitung (20b) mit dem ersten Niederdruckspeicher (23) und über eine erste Leitung (24) mit der Saugseite der ersten Pumpe (25) und dem ersten Umschaltventil (28) verbunden ist.

3. Hydraulische Anhängerbremsanlage nach Anspruch 2, **dadurch gekennzeichnet, dass** die Druckleitung (30) über ein zweites Trennventil (32) in einer ersten Druckteilleitung (30a) mit einem zweiten Einlassventil (34) mit den Aktuatoren (36a, 36b) der Stabilisierungskupplung (38) und über eine zweite Druckteilleitung (30b) und ein drittes Einlassventil (16c) mit zweiten Radbremsen (18c, 18d) einer zweiten Anhängerachse verbunden ist, die Aktuatoren (36a, 36b) und die zweiten Radbremsen (18c, 18d) jeweils mit einer Rücklaufleitung (20a, 40) verbunden sind, in der jeweils ein Auslassventil (22b, 42) angeordnet ist, wobei die Rücklaufleitungen (20a, 40) jeweils mit einem zweiten Niederdruckspeicher (44) und über eine zweite Leitung (46) mit der Saugseite der zweiten Pumpe (48) und dem zweiten Umschaltventil (50) verbunden sind, das an die Druckleitung (30) angeschlossen ist.

4. Hydraulische Anhängerbremsanlage nach Anspruch 1, **dadurch gekennzeichnet, dass** der Hauptbremszylinder (10) mit einer Druckleitung (30) verbunden ist, in der ein zweites Trennventil (32) in einer ersten Druckteilleitung (30a) mit einem zweiten Einlassventil (34) mit den Aktuatoren (36a, 36b) der Stabilisierungskupplung (38) und über eine zweite Druckteilleitung (30b) und ein drittes Einlassventil (16c) mit zweiten Radbremsen (18c, 18d) einer zweiten Anhängerachse verbunden ist, die Aktuatoren (36a, 36b) und die zweiten Radbremsen (18c, 18d) jeweils mit einer Rücklaufleitung (20c, 40) verbunden sind, in der jeweils ein Auslassventil (22c, 42) angeordnet ist, wobei die Rücklaufleitungen (20c, 40) mit einem zweiten Niederdruckspeicher (44) und über eine zweite Leitung (46) mit der Saugseite der zweiten Pumpe (48) und dem zweiten Umschaltventil (50) verbunden sind, das an die Druckleitung (30) angeschlossen ist.

5. Hydraulische Anhängerbremsanlage nach Anspruch 4, **dadurch gekennzeichnet, dass** den Radbremsen (18a, 18b) der ersten Anhängerachse das erste Einlass- und das erste Auslassventil (16a; 22b) zugeordnet sind.

6. Hydraulische Anhängerbremsanlage nach Anspruch 5, **dadurch gekennzeichnet, dass** die ersten Radbremsen (18a, 18b) über eine erste Rücklaufleitung (20b) und das in der ersten Rücklaufleitung (20b) angeordnete erste Auslassventil (22b) mit dem ersten Niederdruckspeicher (23) verbunden sind.

7. Hydraulische Anhängerbremsanlage nach Anspruch 4, 5 oder 6, **dadurch gekennzeichnet, dass** die Rücklaufleitungen (20a, 20b, 20c) mit dem ersten Auslassventil (22b) und einem zweiten Auslassventil (22c) über eine erste Verbindungsleitung (221) mit dem ersten Niederdruckspeicher (23) und dem zweiten Niederdruckspeicher (44) verbunden sind.

8. Hydraulische Anhängerbremsanlage nach Anspruch 1 oder 7, **dadurch gekennzeichnet, dass** die Druckseiten der ersten Druckmittelpumpe (25) und der zweiten Druckmittelpumpe (48) über eine zweite Verbindungsleitung (220) miteinander verbunden sind.

9. Hydraulische Anhängerbremsanlage nach Anspruch 8, **dadurch gekennzeichnet, dass** die zweite Verbindungsleitung (220) zwischen dem ersten Trennventil (14) und der Bypassleitung mit der ersten Druckmittelpumpe (25) an eine erste Bremsteilleitung (12b) der einen Bremsleitung (12) und zwischen einem zweiten Trennventil (32) und einer Bypassleitung um das zweite Trennventil (32) mit der zweiten Druckmittelpumpe (48) an die erste Druckteilleitung (30a) angeschlossen ist.

10. Hydraulische Anhängerbremsanlage nach Anspruch 1, **dadurch gekennzeichnet, dass** der Hauptbremszylinder (10) mit einer Druckleitung (30) über das zweite Umschaltventil (50) mit der Saugseite der zweiten Druckmittelpumpe (48) verbunden ist, dass die Druckseite der zweiten Druckmittelpumpe (48) über eine erste Druckteilleitung (30a) mit einem zweiten Einlassventil (34) mit den Aktuatoren (36a, 36b) der Stabilisierungskupplung (38) und über eine zweite Druckteilleitung (30b) und ein drittes Einlassventil (16c) mit zweiten Radbremsen (18c, 18d) einer zweiten Anhängerachse verbunden ist, die Aktuatoren (36a, 36b) und die zweiten Radbremsen (18c, 18d) jeweils mit einer Rücklaufleitung (20c, 40) verbunden sind, in der jeweils ein Auslassventil (22c, 42) angeordnet ist, wobei die Rücklaufleitungen (20c, 40) über eine erste Verbindungsleitung (221) mit dem ersten und einem zweiten Niederdruckspeicher (23, 44) und über eine zweite Leitung (46) mit der Saugseite der zweiten Pumpe (48)und dem zweiten Umschaltventil (50) verbunden sind.

11. Hydraulische Anhängerbremsanlage nach Anspruch 10, **dadurch gekennzeichnet, dass** die Druckseiten der ersten Druckmittelpumpe (25) und der zweiten Druckmittelpumpe (48) über eine zweite Verbindungsleitung (220) miteinander verbunden sind.

12. Hydraulische Anhängerbremsanlage nach Anspruch 1, **dadurch gekennzeichnet, dass** das erste Umschaltventil (28) über eine dritte Verbindungsleitung (230) mit der Saugseite der zweiten Druckmittelpumpe (48), einem zweiten Niederdruckspeicher (44) und einem zweiten Auslassventil (42) verbunden ist, wobei der zweite Niederdruckspeicher (44) an den ersten Niederdruckspeicher (23) über eine erste Verbindungsleitung (221) angeschlossen ist und die Druckseite der zweiten Druckmittelpumpe (48) über eine zweite Verbindungsleitung (220) an die Druckseite der ersten Druckmittelpumpe (25) angeschlossen ist, über eine erste Druckteilleitung (30a) mit einem zweiten Einlassventil (34) mit den Aktuatoren (36a, 36b) der Stabilisierungskupplung (38) und über eine zweite Druckteilleitung (30b) und ein drittes Einlassventil (16c) mit zweiten Radbremsen (18c, 18d) verbunden ist, wobei die zweiten Radbremsen (18c, 18d) über eine zweite Rücklaufleitung (20c) und ein drittes Auslassventil (22c) an die erste Verbindungsleitung (221) angeschlossen sind.

13. Hydraulische Anhängerbremsanlage nach Anspruch 1, **dadurch gekennzeichnet, dass**
die eine Bremsleitung (12) nach dem ersten Trennventil (14) über eine erste Bremsteilleitung (12b) mit dem ersten Einlassventil (16a) mit den ersten Radbremsen (18a, 18b) einer ersten Anhängerachse und über eine zweite Bremsteilleitung (12a) mit einem dritten Einlassventil (16b) mit zweiten Radbremsen (18c, 18d) einer zweiten Anhängerachse verbun-den ist und dass die Radbremsen (18a, 18b) der ersten Anhängerachse mit einer ersten und die Radbremsen der zweiten Anhängerachse mit einer dritten Rücklaufleitung (20a, 20b) verbunden sind, in denen das erste Auslassventil (22a) bzw. ein drittes Auslassventil (22b) angeordnet ist, wobei die erste und dritte Rücklaufleitungen (20a, 20b) mit dem ersten Niederdruckspeicher (23) und über eine erste Leitung (24) mit der Saugseite der ersten Pumpe (25) und dem ersten Umschaltventil (28) verbunden sind.

14. Hydraulische Anhängerbremsanlage nach Anspruch 13, **dadurch gekennzeichnet, dass** der Hauptbremszylinder (10) mit einer Druckleitung (30) verbunden ist, welche über ein zweites Trennventil (32) und eine Druckteilleitung (30a) mit einem zweiten Einlassventil (34) mit den Aktuatoren (36a, 36b) der Stabilisierungskupplung (38) verbunden ist, die Aktuatoren (36a, 36b) mit einer zweiten Rücklaufleitung (40) verbunden sind, in der ein zweites Auslassventil (42) angeordnet ist, wobei die zweite Rücklaufleitung (40) mit einem zweiten Niederdruckspeicher (44) und über eine zweite Leitung (46) mit der Saugseite der zweiten Pumpe (48) und dem zweiten Umschaltventil (50) verbunden ist, das an die Druckleitung (30) angeschlossen ist und wobei ferner die erste und eine dritte Rücklaufleitung (20b; 20a) mit dem ersten und einem dritten Auslassventil (22b; 22a) über eine erste Verbindungsleitung (221) mit dem ersten Niederdruckspeicher (23) und dem zweiten Niederdruckspeicher (44) verbunden sind und die Druckseiten der ersten Druckmittelpumpe (25) und der zweiten Druckmittelpumpe (48) über eine zweite Verbindungsleitung (220) miteinander verbunden sind.

15. Hydraulische Anhängerbremsanlage nach Anspruch 14, **dadurch gekennzeichnet, dass** zwischen dem zweiten Einlassventil (34) und der Anschlussstelle der zweiten Rücklaufleitung (40) mit dem zweiten Auslassventil (42) an die erste Druckteilleitung (30a) ein zur Stabilisierungskupplung (38) öffnendes Rückschlagventil (51) angeordnet ist.

## Claims

1. Hydraulic trailer brake system having a device (80) for braking the wheels of the trailer and having a controllable pressure generator (9) for actuating wheel brakes (18a, 18b, 18c, 18d) in a wheel-individual or axle-individual manner, the device (80) being assigned a hydraulic brake-force transmission apparatus having a storage reservoir (27) for the pressure medium and a brake master cylinder (10), and the brake-force transmission apparatus being connected via brake lines to the wheel brakes (18a, 18b, 18c, 18d), and an electronic control or regulating unit (62) which obtains energy via a supply unit (60), **characterized in that** at least two first wheel brakes (18a, 18b) are connected to the brake master cylinder (10) via a first separating valve (14) which is arranged in one (12) of the brake lines, **in that** the first wheel brakes (18a, 18b) are assigned at least one first inlet and one first outlet valve (16a; 22b), **in that** a first switchover valve (28) and a first electrically actuable pressure-medium pump (25) being provided in a bypass line around the first separating valve (14), the suction side of which pressure-medium pump (25) is connected to the first switchover valve (28), the at least one first outlet valve (22b) and a first low-pressure accumulator (23), and the pressure side of which pressure-medium pump (25) is connected to the first separating valve (14) and the at least one first inlet valve (16a), **in that** a stabilizing coupling (38) between the trailer and the towing vehicle has actuators (36a, 36b) which are connected to a second pressure-medium pump (48) and which can change the tensioning force of the stabilizing coupling (38) if the second pressure-medium pump (48) conveys pressure medium into the actuators, and **in that** the suction side of the second pressure-medium pump (48) can be connected to the brake master cylinder (10) via the first or a second switchover valve (28, 50).

2. Hydraulic trailer brake system according to Claim 1, **characterized in that** the brake master cylinder (10) has two pressure chambers with two outlets (200, 201), one brake line (12) being connected to the first outlet (201) and a pressure line (30) being connected to the second outlet (200), and one brake line (12) being connected downstream of the first separating valve (14) via a first brake part line (12b) with the first inlet valve (16a) to the first wheel brakes (18a, 18b), and **in that** the first wheel brakes (18a, 18b) are connected to a first return line (20b), in which the first outlet valve (22b) is arranged, the first return line (20b) being connected to the first low-pressure accumulator (23) and via a first line (24) to the suction side of the first pump (25) and the first switchover valve (28).

3. Hydraulic trailer brake system according to Claim 2, **characterized in that** the pressure line (30) is connected via a second separating valve (32) in a first pressure part line (30a) with a second inlet valve (34) to the actuators (36a, 36b) of the stabilizing coupling (38) and via a second pressure part line (30b) and a third inlet valve (16c) to second wheel brakes (18c, 18d) of a second trailer axle, and the actuators (36a, 36b) and the second wheel brakes (18c, 18d) are connected in each case to a return line (20a, 40), in which in each case one outlet valve (22b, 42) is arranged, the return lines (20a, 40) being connected in each case to a second low-pressure accumulator (44) and via a second line (46) to the suction side of the second pump (48) and the second switchover valve (50) which is connected to the pressure line (30).

4. Hydraulic trailer brake system according to Claim 1, **characterized in that** the brake master cylinder (10) is connected to a pressure line (30), in which a second separating valve (32) is connected in a first pressure part line (30a) with a second inlet valve (34) to the actuators (36a, 36b) of the stabilizing coupling (38) and via a second pressure part line (30b) and a third inlet valve (16c) to second wheel brakes (18c, 18d) of a second trailer axle, and the actuators (36a, 36b) and the second wheel brakes (18c, 18d) are connected in each case to a return line (20c, 40), in which in each case one outlet valve (22c, 42) is arranged, the return lines (20c, 40) being connected to a second low-pressure accumulator (44) and via a second line (46) to the suction side of the second pump (48) and the second switchover valve (50) which is connected to the pressure line (30).

5. Hydraulic trailer brake system according to Claim 4, **characterized in that** the wheel brakes (18a, 18b) of the first trailer axle are assigned the first inlet and the first outlet valve (16a; 22b).

6. Hydraulic trailer brake system according to Claim 5, **characterized in that** the first wheel brakes (18a, 18b) are connected to the first low-pressure accumulator (23) via a first return line (20b) and the first outlet valve (22b) which is arranged in the first return line (20b).

7. Hydraulic trailer brake system according to Claim 4, 5 or 6, **characterized in that** the return lines (20a, 20b, 20c) are connected with the first outlet valve (22b) and a second outlet valve (22c) via a first connecting line (221) to the first low-pressure accumulator (23) and the second low-pressure accumulator (44).

8. Hydraulic trailer brake system according to Claim 1 or 7, **characterized in that** the pressure sides of the first pressure-medium pump (25) and the second pressure-medium pump (48) are connected to one another via a second connecting line (220).

9. Hydraulic trailer brake system according to Claim 8, **characterized in that** the second connecting line (220) is connected between the first separating valve (14) and the bypass line with the first pressure-medium pump (25) to a first brake part line (12b) of one brake line (12) and between a second separating valve (32) and a bypass line around the second separating valve (32) with the second pressure-medium pump (48) to the first pressure part line (30a).

10. Hydraulic trailer brake system according to Claim 1, **characterized in that** the brake master cylinder (10) is connected with a pressure line (30) via the second switchover valve (50) to the suction side of the second pressure-medium pump (48), **in that** the pressure side of the second pressure-medium pump (48) is connected via a first pressure part line (30a) with a second inlet valve (34) to the actuators (36a, 36b) of the stabilizing coupling (38) and via a second pressure part line (30b) and a third inlet valve (16c) to second wheel brakes (18c, 18d) of a second trailer axle, the actuators (36a, 36b) and the second wheel brakes (18c, 18d) are connected in each case to a return line (20c, 40), in which in each case one outlet valve (22c, 42) is arranged, the return lines (20c, 40) being connected via a first connecting line (221) to the first and a second low-pressure accumulator (23, 44) and via a second line (46) to the suction side of the second pump (48) and the second switchover valve (50).

11. Hydraulic trailer brake system according to Claim 10, **characterized in that** the pressure sides of the first pressure-medium pump (25) and the second pressure-medium pump (48) are connected to one another via a second connecting line (220).

12. Hydraulic trailer brake system according to Claim 1, **characterized in that** the first switchover valve (28) is connected via a third connecting line (230) to the suction side of the second pressure-medium pump (48), a second low-pressure accumulator (44) and a second outlet valve (42), the second low-pressure accumulator (44) being connected to the first low-pressure accumulator (23) via a first connecting line (221) and the pressure side of the second pressure-medium pump (48) being connected via a second connecting line (220) to the pressure side of the first pressure-medium pump (25), via a first pressure part line (30a) with a second inlet valve (34) to the actuators (36a, 36b) of the stabilizing coupling (38) and via a second pressure part line (30b) and a third inlet valve (16c) to second wheel brakes (18c, 18d), the second wheel brakes (18c, 18d) being connected via a second return line (20c) and a third outlet valve (22c) to the first connecting line (221).

13. Hydraulic trailer brake system according to Claim 1, **characterized in that** one brake line (12) is connected downstream of the first separating valve (14) via a first brake part line (12b) with the first inlet valve (16a) to the first wheel brakes (18a, 18b) of a first trailer axle and via a second brake part line (12a) with a third inlet valve (16b) to second wheel brakes (18c, 18d) of a second trailer axle, and **in that** the wheel brakes (18a, 18b) of the first trailer axle to a first return line and the wheel brakes of the second trailer axle are connected to a third return line (20a, 20b), in which the first outlet valve (22a) and a third outlet valve (22b) are arranged, the first and third return lines (20a, 20b) being connected to the first low-pressure accumulator (23) and via a first line (24) to the suction side of the first pump (25) and the first switchover valve (28).

14. Hydraulic trailer brake system according to Claim 13, **characterized in that** the brake master cylinder (10) is connected to a pressure line (30) which is connected via a second separating valve (32) and a pressure part line (30a) with a second inlet valve (34) to the actuators (36a, 36b) of the stabilizing coupling (38), and the actuators (36a, 36b) are connected to a second return line (40), in which a second outlet valve (42) is arranged, the second return line (40) being connected to a second low-pressure accumulator (44) and via a second line (46) to the suction side of the second pump (48) and the second switchover valve (50) which is connected to the pressure line (30), and, furthermore, the first and a third return line (20b; 20a) being connected with the first and a third outlet valve (22b; 22a) via a first connecting line (221) to the first low-pressure accumulator (23) and the second low-pressure accumulator (44) and the pressure sides of the first pressure-medium pump (25) and the second pressure-medium pump (48) being connected to one another via a second connecting line (220).

15. Hydraulic trailer brake system according to Claim 14, **characterized in that** a non-return valve (51) which opens towards the stabilizing coupling (38) is arranged between the second inlet valve (34) and the connection point of the second return line (40) with the second outlet valve (42) to the first pressure part line (30a).

## Revendications

1. Système de freinage hydraulique pour remorque, comprenant un dispositif (80) pour freiner les roues de la remorque et comprenant un générateur de pression commandable (9) pour commander, pour chaque roue individuelle ou pour chaque essieu individuel, des freins de roue (18a, 18b, 18c, 18d), le dispositif (80) étant associé à un dispositif hydraulique de transfert de la force de freinage comprenant un réservoir (27) pour le fluide sous pression et un cylindre de frein principal (10) et le dispositif de transfert de la force de freinage étant connecté par le biais de conduites de frein aux freins de roue (18a, 18b, 18c, 18d), ainsi qu'une unité électronique de commande ou de régulation (62), laquelle reçoit de l'énergie par le biais d'une unité d'alimentation (60), **caractérisé en ce qu'**au moins deux premiers freins de roue (18a, 18b) sont connectés au cylindre de frein principal (10) par le biais d'une première soupape de coupure (14) disposée dans l'une (12) des conduites de frein,
au moins une première soupape d'entrée et une première soupape de sortie (16a ; 22b) sont associées aux premiers freins de roue (18a, 18b), une première soupape de commutation (28) et une première pompe de fluide sous pression à commande électrique (25) sont prévues dans une conduite de dérivation contournant la première soupape de coupure (14), le côté d'aspiration de la pompe étant connecté à la première soupape de commutation (28), à l'au moins une première soupape de sortie (22b) et à un premier accumulateur basse pression (23) et le côté de pression de la pompe étant connecté à la première soupape de coupure (14) et à l'au moins une première soupape d'entrée (16a),
un accouplement de stabilisation (38) entre la remorque et le véhicule tracteur présente des actionneurs (36a, 36b), lesquels sont connectés à une deuxième pompe de fluide sous pression (48) et peuvent modifier la force de serrage de l'accouplement de stabilisation (38) lorsque la deuxième pompe de fluide sous pression (48) refoule du fluide sous pression dans les actionneurs, et **en ce que** le côté d'aspiration de la deuxième pompe de fluide sous pression (48) peut être connecté par le biais de la première ou d'une deuxième soupape de commutation (28, 50) au cylindre de frein principal (10).

2. Système de freinage hydraulique pour remorque selon la revendication 1, **caractérisé en ce que** le cylindre de frein principal (10) présente deux chambres de pression avec deux sorties (200, 201), l'une des conduites de frein (12) étant connectée à la première sortie (201) et une conduite de pression (30) étant connectée à la deuxième sortie (200) et l'une des conduites de frein (12), après la première soupape de coupure (14), étant connectée par le biais d'une première conduite partielle de frein (12b) comprenant la première soupape d'entrée (16a) aux premiers freins de roue (18a, 18b), et **en ce que** les premiers freins de roue (18a, 18b) sont connectés à une première conduite de retour (20b) dans laquelle est disposée la première soupape de sortie (22b), la première conduite de retour (20b) étant connectée au premier accumulateur basse pression (23) et par le biais d'une première conduite (24) au côté d'aspiration de la première pompe (25) et à la première soupape de commutation (28).

3. Système de freinage hydraulique pour remorque selon la revendication 2, **caractérisé en ce que** la conduite de pression (30) est connectée par le biais d'une deuxième soupape de coupure (32) dans une première conduite partielle de pression (30a) comprenant une deuxième soupape d'entrée (34) aux actionneurs (36a, 36b) de l'accouplement de stabilisation (38) et par le biais d'une deuxième conduite partielle de pression (30b) et d'une troisième soupape d'entrée (16c) à des deuxièmes freins de roue (18c, 18d) d'un deuxième essieu de remorque, les actionneurs (36a, 36b) et les deuxièmes freins de roue (18c, 18d) étant à chaque fois connectés à une conduite de retour (20a, 40) dans laquelle est à chaque fois disposée une soupape de sortie (22b, 42), les conduites de retour (20a, 40) étant connectées à chaque fois à un deuxième accumulateur basse pression (44) et par le biais d'une deuxième conduite (46) au côté d'aspiration de la deuxième pompe (48) et à la deuxième soupape de commutation (50) qui est raccordée à la conduite de pression (30).

4. Système de freinage hydraulique pour remorque selon la revendication 1, **caractérisé en ce que** le cylindre de frein principal (10) est connecté à une conduite de pression (30) dans laquelle une deuxième soupape de coupure (32), dans une première conduite partielle de pression (30a) comprenant une deuxième soupape d'entrée (34), est connectée aux actionneurs (36a, 36b) de l'accouplement de stabilisation (38) et, par le biais d'une deuxième conduite partielle de pression (30b) et d'une troisième soupape d'entrée (16c), est connectée à des deuxièmes freins de roue (18c, 18d) d'un deuxième essieu de remorque, les actionneurs (36a, 36b) et les deuxièmes freins de roue (18c, 18d) sont à chaque fois connectés à une conduite de retour (20c, 40) dans laquelle est à chaque fois disposée une soupape de sortie (22c, 42), les conduites de retour (20c, 40) étant connectées à un deuxième accumulateur basse pression (44) et par le biais d'une deuxième conduite (46) au côté d'aspiration de la deuxième pompe (48) et à la deuxième soupape de commutation (50) qui est raccordée à la conduite de pression (30).

5. Système de freinage hydraulique pour remorque selon la revendication 4, **caractérisé en ce que** la première soupape d'entrée et la première soupape de sortie (16a ; 22b) sont associées aux freins de roue (18a, 18b) du premier essieu de remorque.

6. Système de freinage hydraulique pour remorque selon la revendication 5, **caractérisé en ce que** les premiers freins de roue (18a, 18b) sont connectés par le biais d'une première conduite de retour (20b) et par le biais de la première soupape de sortie (22b) disposée dans la première conduite de retour (20b) au premier accumulateur basse pression (23).

7. Système de freinage hydraulique pour remorque selon la revendication 4, 5 ou 6, **caractérisé en ce que** les conduites de retour (20a, 20b, 20c) comprenant la première soupape de sortie (22b) et une deuxième soupape de sortie (22c) sont connectées par le biais d'une première conduite de liaison (221) au premier accumulateur basse pression (23) et au deuxième accumulateur basse pression (44).

8. Système de freinage hydraulique pour remorque selon la revendication 1 ou 7, **caractérisé en ce que** les côtés de pression de la première pompe de fluide sous pression (25) et de la deuxième pompe de fluide sous pression (48) sont connectés l'un à l'autre par le biais d'une deuxième conduite de liaison (220).

9. Système de freinage hydraulique pour remorque selon la revendication 8, **caractérisé en ce que** la deuxième conduite de liaison (220) est raccordée entre la première soupape de coupure (14) et la conduite de dérivation à la première pompe de fluide sous pression (25) au niveau d'une première conduite partielle de frein (12b) de l'une des conduites de frein (12) et est raccordée entre une deuxième soupape de coupure (32) et une conduite de dérivation contournant la deuxième soupape de coupure (32) à la deuxième pompe de fluide sous pression (48) au niveau de la première conduite partielle de pression (30a).

10. Système de freinage hydraulique pour remorque selon la revendication 1, **caractérisé en ce que** le cylindre de frein principal (10) est connecté par une conduite de pression (30) par le biais de la deuxième soupape de commutation (50) au côté d'aspiration de la deuxième pompe de fluide sous pression (48), **en ce que** le côté de pression de la deuxième pompe de fluide sous pression (48) est connecté par le biais d'une première conduite partielle de pression (30a) comprenant une deuxième soupape d'entrée (34) aux actionneurs (36a, 36b) de l'accouplement de stabilisation (38) et par le biais d'une deuxième conduite partielle de pression (30b) et d'une troisième soupape d'entrée (16c) aux deuxièmes freins de roue (18c, 18d) d'un deuxième essieu de remorque, les actionneurs (36a, 36b) et les deuxièmes freins de roue (18c, 18d) sont connectés à chaque fois à une conduite de retour (20c, 40) dans laquelle est à chaque fois disposée une soupape de sortie (22c, 42), les conduites de retour (20c, 40) étant connectées par le biais d'une première conduite de liaison (221) au premier et à un deuxième accumulateur basse pression (23, 44) et par le biais d'une deuxième conduite (46) au côté d'aspiration de la deuxième pompe (48) et à la deuxième soupape de commutation (50).

11. Système de freinage hydraulique pour remorque selon la revendication 10, **caractérisé en ce que** les côtés de pression de la première pompe de fluide sous pression (25) et de la deuxième pompe de fluide sous pression (48) sont connectés l'un à l'autre par le biais d'une deuxième conduite de liaison (220).

12. Système de freinage hydraulique pour remorque selon la revendication 1, **caractérisé en ce que** la première soupape de commutation (28) est connectée par le biais d'une troisième conduite de liaison (230) au côté d'aspiration de la deuxième pompe de fluide sous pression (48), à un deuxième accumulateur basse pression (44) et à une deuxième soupape de sortie (42), le deuxième accumulateur basse pression (44) étant raccordé au premier accumulateur basse pression (23) par le biais d'une première conduite de liaison (221) et le côté de pression de la deuxième pompe de fluide sous pression (48) étant raccordé par le biais d'une deuxième conduite de liaison (220) au côté de pression de la première pompe de fluide sous pression (25), étant connecté par le biais d'une première conduite partielle de pression (30a) comprenant une deuxième soupape d'entrée (34) aux actionneurs (36a, 36b) de l'accouplement de stabilisation (38), et par le biais d'une deuxième conduite partielle de pression (30b) et d'une troisième soupape d'entrée (16c) à des deuxièmes freins de roue (18c, 18d), les deuxièmes freins de roue (18c, 18d) étant raccordés par le biais d'une deuxième conduite de retour (20c) et d'une troisième soupape de sortie (22c) à la première conduite de liaison (221).

13. Système de freinage hydraulique pour remorque selon la revendication 1, **caractérisé en ce que** l'une des conduites de frein (12) après la première soupape de coupure (14) est connectée par le biais d'une première conduite partielle de frein (12b) comprenant la première soupape d'entrée (16a) aux premiers freins de roue (18a, 18b) d'un premier essieu de remorque, et par le biais d'une deuxième conduite partielle de frein (12a) comprenant une troisième soupape d'entrée (16b) à des deuxièmes freins de roue (18c, 18d) d'un deuxième essieu de remorque et **en ce que** les freins de roue (18a, 18b) du premier essieu de remorque sont connectés à une première conduite de retour et les freins de roue du deuxième essieu de remorque sont connectés à une troisième conduite de retour (20a, 20b), dans lesquelles est disposée la première soupape de sortie (22a) ou une troisième soupape de sortie (22b), la première et la troisième conduite de retour (20a, 20b) étant connectées au premier accumulateur basse pression (23) et par le biais d'une première conduite (24) au côté d'aspiration de la première pompe (25) et à la première soupape de commutation (28).

14. Système de freinage hydraulique pour remorque selon la revendication 13, **caractérisé en ce que** le cylindre de frein principal (10) est connecté à une conduite de pression (30) qui, par le biais d'une deuxième soupape de coupure (32) et d'une conduite partielle de pression (30a) comprenant une deuxième soupape d'entrée (34), est connectée aux actionneurs (36a, 36b) de l'accouplement de stabilisation (38), les actionneurs (36a, 36b) sont connectés à une deuxième conduite de retour (40) dans laquelle est disposée une deuxième soupape de sortie (42), la deuxième conduite de retour (40) étant connectée à un deuxième accumulateur basse pression (44) et par le biais d'une deuxième conduite (46) au côté d'aspiration de la deuxième pompe (48) et à la deuxième soupape de commutation (50) qui est raccordée à la conduite de pression (30) et en outre la première et une troisième conduite de retour (20b ; 20a) comprenant la première et une troisième soupape de sortie (22b ; 22a) étant connectées par le biais d'une première conduite de liaison (221) au premier accumulateur basse pression (23) et au deuxième accumulateur basse pression (44) et les côtés de pression de la première pompe de fluide sous pression (25) et de la deuxième pompe de fluide sous pression (48) étant connectés l'un à l'autre par le biais d'une deuxième conduite de liaison (220).

15. Système de freinage hydraulique pour remorque selon la revendication 14, **caractérisé en ce qu'**entre la deuxième soupape d'entrée (34) et le point de raccordement de la deuxième conduite de retour (40) à la deuxième soupape de sortie (42) est disposée, au niveau de la première conduite partielle de pression (30a), une soupape antiretour (51) s'ouvrant vers l'accouplement de stabilisation (38).
